# EUROPEAN PATENT SPECIFICATION

(11) **EP 4 322 617 B1**
(45) Date of publication and mention of the grant of the patent: **22.07.2026**
(21) Application number: 22794633.2
(22) Date of filing: 16.04.2022
(51) Int. Cl.: H04L 45/74, H04W 88/08

(54) **COMMUNICATION METHOD, APPARATUS, AND SYSTEM**
KOMMUNIKATIONSVERFAHREN, -VORRICHTUNG UND -SYSTEM
PROCÉDÉ, APPAREIL ET SYSTÈME DE COMMUNICATION

(30) Priority: 30.04.2021 CN 202110486587
(43) Date of publication of application: 14.02.2024
(73) Proprietor: Huawei Technologies Co., Ltd., Shenzhen, Guangdong 518129 (CN)
(72) Inventor: ZHU, Yuanping, Shenzhen, Guangdong 518129 (CN); SHI, Yulong, Shenzhen, Guangdong 518129 (CN); LUO, Haiyan, Shenzhen, Guangdong 518129 (CN); LIU, Jing, Shenzhen, Guangdong 518129 (CN)
(74) Representative: Thun, Clemens
(86) International application number: PCT/CN2022/087250
(87) International publication number: WO 2022/228162

(56) References cited:
- CN-A- 110 351 700
- CN-A- 110 475 267
- CN-A- 111 586 890
- US-A1- 2013 137 434
- US-A1- 2020 154 287
- SAMSUNG: "Overview on IAB node setup (NSA)", vol. RAN WG2, no. Athens, Greece; 20190225 - 20190301, 15 February 2019 (2019-02-15), XP051602275, Retrieved from the Internet <URL:http://www.3gpp.org/ftp/tsg%5Fran/WG2%5FRL2/TSGR2%5F105/Docs/R2%2D1900904%2Ezip> [retrieved on 20190215]
- HUAWEI, HISILICON: "IP address management for IAB nodes", 3GPP DRAFT; R2-1906066 IP ADDRESS MANAGEMENT FOR IAB NODES, vol. RAN WG2, 3 May 2019 (2019-05-03), Reno, USA, pages 1 - 3, XP051710393

## Description

### TECHNICAL FIELD

Embodiments of the present invention relate to the field of communication technologies, and in particular, to a communication method, apparatus, and system.

### BACKGROUND

5^{th} generation mobile communication (5G) poses stricter requirements on network performance indicators, such as 1000-fold increase in a capacity indicator, wider coverage, ultra-high reliability, and an ultra-low latency. To meet the ultra-high capacity requirement of 5G, high-frequency small cells are used for networking in a hotspot area. However, because high-frequency carriers have problems of poor propagation performance, severe attenuation due to obstacles, and small coverage, a large quantity of small cells need to be densely deployed. Consequently, a large quantity of optical fibers are required for backhaul, leading to a great difficulty in deploying the optical fibers. In addition, to meet the requirement of 5G for wide coverage, network coverage needs to be provided in some remote areas, leading to a great difficulty in deploying the optical fibers.

To resolve the foregoing problems, an integrated access and backhaul (integrated access and backhaul, IAB) technology in which both an access link (access link) and a backhaul link (backhaul link) use wireless transmission is introduced in the industry. In an IAB network, user equipment (user equipment, UE) may access an IAB node through a wireless access link, and the IAB node may be connected to an IAB donor (donor) node through a wireless backhaul link. However, signaling overheads in the IAB network are high, resulting in a waste of transmission resources.
The document Samsung: "Overview on IAB node setup (NSA)", XP051602275, is a standardization draft document for IAB node setup.
The document US 2020/154287 A1 shows a system and network for a network optimization and control.

### SUMMARY

The present invention is defined by the independent claims. Further advantageous developments are shown by the dependent claims.

Embodiments of the present invention disclose a communication method, apparatus, and system, to save transmission resources.

A first aspect discloses a communication method. The communication method is applied, as claimed, to a radio access network (radio access network, RAN) management network element, or may be applied to a module (for example, a chip) in a RAN management network element. The RAN management network element is, as claimed, connected to a first IAB donor through a first interface. The first IAB donor is, as claimed, connected to a first IAB node through a wireless backhaul link. The following uses an example of being applied to the RAN management network element for description. The communication method may include: determining configuration information of the first IAB donor and/or the first IAB node, where the configuration information includes one or more of address information, routing information, and cell information; and sending the configuration information to the first IAB donor.

In this embodiment of the present invention, the RAN management network element is introduced on a RAN side, and the RAN management network element may manage address configuration, routing configuration, and cell configuration. Because the RAN management network element may simultaneously manage address configurations, routing configurations, and cell configurations of a plurality of IAB donors and IAB nodes in a management range of the plurality of IAB donors, it can be ensured that in a range of two or more IAB donor networks, configuration information of different IAB nodes does not conflict with each other in a case of mutual communication. In this way, when there is a need for service transmission across a donor network, conflicts among the plurality of IAB donor networks can be avoided, so that signaling overheads of interaction and coordination among the plurality of IAB donors can be avoided, thereby reducing signaling overheads and saving transmission resources. In addition, because the RAN management network element is located on the RAN side, it takes a short time for information transmission between the RAN management network element and the IAB donor. Therefore, an information transmission latency can be reduced, so that time validity of obtaining the configuration information can be improved.

In a possible implementation, the method further includes: receiving a request message from the first IAB donor. The sending the configuration information to the first IAB donor includes: sending the configuration information to the first IAB donor in response to the request message.

In this embodiment of the present invention, the RAN management network element sends, as claimed, the configuration information to the IAB donor only after receiving a request message that is from the IAB donor and that is used to request the configuration information. This can prevent the RAN management network element from sending the configuration information to the IAB donor when the IAB donor and/or the IAB node in the management range of the IAB donor does not need the configuration information, so that transmission of unnecessary information can be reduced, thereby saving transmission resources.

In a possible implementation, the address information includes a backhaul adaptation protocol (backhaul adaptation protocol, BAP) layer identifier and/or an internet protocol (internet protocol, IP) address.

In a possible implementation, the routing information includes an adaptation layer routing identifier and/or a routing mapping table. The routing mapping table includes the adaptation layer routing identifier and an identifier of a next-hop node.

In a possible implementation, the cell information includes an identifier of a cell and a resource configuration of the cell.

In a possible implementation, the resource configuration of the cell includes one or more of frequency information of the cell, bandwidth information of the cell, and an uplink and downlink duplex mode of the cell.

In a possible implementation, the request message includes a quantity of addresses required by the first IAB node and/or the first IAB donor and identifiers/an identifier of the first IAB node and/or the first IAB donor.

In this embodiment of the present invention, the RAN management network element may determine address information of the IAB node and/or the IAB donor based on a quantity of addresses required by the IAB node and/or the IAB donor included in the request message. This can ensure that the quantity of the addresses included in the address information sent to the IAB donor is just enough for the IAB node and/or the IAB donor to use, thereby preventing insufficiency of the addresses for the IAB node and/or the IAB donor to use, and avoiding a waste of transmission resources due to a large quantity of addresses.

In a possible implementation, the request message includes topology information. The topology information includes a connection relationship between the first IAB donor and/or the first IAB node and another node.

In this embodiment of the present invention, the RAN management network element may determine routing information of the IAB node and/or the IAB donor based on topology information included in the request message, so that accuracy of the routing information sent to the IAB donor can be ensured, thereby ensuring correct data transmission.

In a possible implementation, the request message includes an identifier of a cell serving the first IAB donor and/or the first IAB node.

In this embodiment of the present invention, the RAN management network element may re-determine cell information for these cells based on identifiers of the cells included in the request message, so that determining unnecessary cell information can be avoided, thereby saving transmission resources. The re-determined cell information may include a resource configuration of the cell. In a case, the re-determined cell information may further include the identifier of the cell, so that the IAB donor and/or the IAB node may determine, based on the identifier of the cell, which resource configuration belongs to which cell. In another case, the re-determined cell information may further include the identifier of the cell and a re-determined identifier of the cell, so that the IAB donor and/or the IAB node may determine, based on the identifier of the cell and the re-determined identifier of the cell, which cell is updated from an old name to a new name.

In a possible implementation, the request message is a first interface establishment request message or an IAB configuration update request message.

A second aspect discloses a communication method. The communication method may be applied to a first IAB donor, or may be applied to a module (for example, a chip) in the first IAB donor. The first IAB donor is connected to a RAN management network element through a first interface. The first IAB donor is connected to a first IAB node through a wireless backhaul link. The following uses an example of being applied to the first IAB donor for description. The communication method may include: receiving configuration information of the first IAB donor and/or the first IAB node from the RAN management network element through the first interface, where the configuration information includes one or more of address information, routing information, and cell information; and obtaining one or more of the address information, the routing information, and the cell information.

In this embodiment of the present invention, an IAB donor may receive configuration information of the IAB donor and/or an IAB node from the RAN management network element that manages the IAB donor, and then may transmit data based on the configuration information of the IAB donor and/or the IAB node. It can be learned that the IAB donor may obtain, from the RAN management network element, address configuration, routing configuration, and cell configuration of the IAB node in a management range of the IAB donor, and does not need to interact and coordinate with another IAB donor. Therefore, when there is a need for service transmission across a donor network, signaling overheads of interaction and coordination among a plurality of IAB donors can be avoided, thereby reducing signaling overheads and saving transmission resources. In addition, because the RAN management network element is located on a RAN side, it takes a short time for information transmission between the IAB donor and the RAN management network element. Therefore, an information transmission latency can be reduced, so that time validity of obtaining the configuration information can be improved.

In a possible implementation, the communication method may further include: sending a request message to the RAN management network element. The request message is used to request the configuration information.

In this embodiment of the present invention, the IAB donor may send, to the RAN management network element, a request message used to request the configuration information, so that the RAN management network element may send the configuration information to the IAB donor in response to the request message. This can prevent the RAN management network element from sending the configuration information to the IAB donor when the IAB donor and/or the IAB node in the management range of the IAB donor does not need the configuration information, so that transmission of unnecessary information can be reduced, thereby saving transmission resources.

In a possible implementation, the communication method may further include: sending the configuration information of the first IAB node to the first IAB node.

In this embodiment of the present invention, after receiving the configuration information of the IAB node from the RAN management network element, the IAB donor may send the configuration information of the IAB node to the IAB node, so that the IAB node can correctly transmit data based on the configuration information of the IAB node.

In a possible implementation, the address information includes a BAP layer identifier and/or an IP address.

In a possible implementation, the routing information includes an adaptation layer routing identifier and/or a routing mapping table. The routing mapping table includes the adaptation layer routing identifier and an identifier of a next-hop node.

In a possible implementation, the cell information includes an identifier of a cell and a resource configuration of the cell.

In a possible implementation, the resource configuration of the cell includes one or more of frequency information of the cell, bandwidth information of the cell, and an uplink and downlink duplex mode of the cell.

In a possible implementation, the request message includes a quantity of addresses required by the first IAB node and/or the first IAB donor and identifiers/an identifier of the first IAB node and/or the first IAB donor.

In this embodiment of the present invention, the IAB donor may send, to the RAN management network element, a quantity of addresses required by the IAB node and/or the IAB donor, so that the RAN management network element may determine address information of the IAB node and/or the IAB donor based on the quantity of the addresses required by the IAB node and/or the IAB donor. This can ensure that the quantity of the addresses included in the address information sent to the IAB donor is just enough for the IAB node and/or the IAB donor to use, thereby preventing insufficiency of the addresses for the IAB node and/or the IAB donor to use, and avoiding a waste of transmission resources due to a large quantity of addresses.

In a possible implementation, the request message includes topology information. The topology information includes a connection relationship between the first IAB donor and/or the first IAB node and another node.

In this embodiment of the present invention, the IAB donor may send topology information to the RAN management network element, so that the RAN management network element may determine routing information of the IAB node and/or the IAB donor based on the topology information, so that accuracy of the routing information sent to the IAB donor can be ensured, thereby ensuring correct data transmission.

In a possible implementation, the request message includes an identifier of a cell serving the first IAB donor and/or the first IAB node.

In this embodiment of the present invention, the IAB donor may send, to the RAN management network element, an identifier of a cell whose cell information needs to be updated, so that the RAN management network element may re-determine cell information for these cells based on identifiers of the cells. This can avoid to determine unnecessary cell information, thereby saving transmission resources. The re-determined cell information may include a resource configuration of the cell. In a case, the re-determined cell information may further include the identifier of the cell, so that the IAB donor and/or the IAB node may determine, based on the identifier of the cell, which resource configuration belongs to which cell. In another case, the re-determined cell information may further include the identifier of the cell and a re-determined identifier of the cell, so that the IAB donor and/or the IAB node may determine, based on the identifier of the cell and the re-determined identifier of the cell, which cell is updated from an old name to a new name.

In a possible implementation, the request message is a first interface establishment request message or an IAB configuration update request message.

A third aspect discloses a communication method. The communication method may be applied to a RAN management network element, or may be applied to a module (for example, a chip) in the RAN management network element. The RAN management network element is connected to a first IAB donor through a first interface. The RAN management network element is connected to a first IAB node through a second interface. The first IAB donor is connected to the first IAB node through a wireless backhaul link. The following uses an example of being applied to the RAN management network element for description. The communication method may include: determining configuration information of the first IAB node, where the configuration information includes one or more of address information, routing information, and cell information; and sending the configuration information to the first IAB node through the second interface.

In this embodiment of the present invention, the RAN management network element is introduced on a RAN side, and the RAN management network element may manage address configuration, routing configuration, and cell configuration. Because the RAN management network element may simultaneously manage address configurations, routing configurations, and cell configurations of IAB nodes in a management range of a plurality of IAB donors, in a range of two or more IAB donor networks, configuration information of different IAB nodes does not conflict with each other in a case of mutual communication. In this way, when there is a need for service transmission across a donor network, conflicts among the plurality of IAB donor networks can be avoided, so that when there is a need for the service transmission across the donor network, signaling overheads of interaction and coordination among the plurality of IAB donors can be avoided, thereby reducing signaling overheads and saving transmission resources. In addition, because the IAB node may directly communicate with the RAN management network element, the configuration information of the IAB node may be directly sent by the RAN management network element to the IAB node without passing through the IAB donor, so that signaling overheads can be further reduced, thereby further saving transmission resources. Further, because the RAN management network element is located on the RAN side, it takes a short time for information transmission between the RAN management network element and the IAB node. Therefore, an information transmission latency can be reduced, so that time validity of obtaining the configuration information can be improved.

In a possible implementation, the communication method may further include: sending the configuration information to the first IAB donor through the first interface.

In this embodiment of the present invention, the RAN management network element needs to send the configuration information of the IAB node to the IAB donor, so that the IAB donor can manage the IAB node based on the configuration information of the IAB node.

In a possible implementation, the communication method may further include: determining configuration information of the first IAB donor; and sending the configuration information of the first IAB donor to the first IAB donor through the first interface.

In this embodiment of the present invention, because the RAN management network element may simultaneously manage address configurations, routing configurations, and cell configurations of the plurality of IAB donors, it can be ensured that configuration information of different IAB donors are different, so that the conflicts among the plurality of IAB donor networks can be avoided, and signaling overheads of interaction and coordination among the plurality of IAB donors can be avoided, thereby reducing signaling overheads and saving transmission resources.

In a possible implementation, the address information includes a BAP layer identifier and/or an IP address.

In a possible implementation, the routing information includes an adaptation layer routing identifier and/or a routing mapping table. The routing mapping table includes the adaptation layer routing identifier and an identifier of a next-hop node.

In a possible implementation, the cell information includes an identifier of a cell and a resource configuration of the cell.

In a possible implementation, the resource configuration of the cell includes one or more of frequency information of the cell, bandwidth information of the cell, and an uplink and downlink duplex mode of the cell.

In a possible implementation, the communication method may further include: receiving a first request message from the first IAB donor; and the sending the configuration information of the first IAB donor to the first IAB donor through the first interface includes: sending the configuration information of the first IAB donor to the first IAB donor through the first interface in response to the first request message.

In this embodiment of the present invention, the RAN management network element may send the configuration information of the IAB donor to the IAB donor only after receiving a request message that is from the IAB donor and that is used to request the configuration information of the IAB donor. This can prevent the RAN management network element from sending the configuration information of the IAB donor to the IAB donor when the IAB donor does not need the configuration information, so that transmission of unnecessary information can be reduced, thereby saving transmission resources.

In a possible implementation, the first request message includes a quantity of addresses required by the first IAB donor and an identifier of the first IAB donor.

In this embodiment of the present invention, the RAN management network element may determine address information of the IAB donor based on a quantity of addresses required by the IAB donor included in the request message. This can ensure that the quantity of the addresses included in the address information sent to the IAB donor is just enough for the IAB donor to use, thereby preventing insufficiency of the addresses for the IAB donor to use, and avoiding a waste of transmission resources due to a large quantity of addresses.

In a possible implementation, the first request message includes first topology information. The first topology information includes a connection relationship between the first IAB donor and an IAB node.

In this embodiment of the present invention, the RAN management network element may determine routing information of the IAB donor based on topology information included in the request message, so that accuracy of the routing information sent to the IAB donor can be ensured, thereby ensuring correct data transmission.

In a possible implementation, the first request message includes an identifier of a cell serving the first IAB donor.

In this embodiment of the present invention, the RAN management network element may re-determine cell information for these cells based on identifiers of the cells included in the request message, so that determining unnecessary cell information can be avoided, thereby saving transmission resources. The re-determined cell information may include a resource configuration of the cell. In a case, the re-determined cell information may further include the identifier of the cell, so that the IAB donor may determine, based on the identifier of the cell, which resource configuration belongs to which cell. In another case, the re-determined cell information may further include the identifier of the cell and a re-determined identifier of the cell, so that the IAB donor may determine, based on the identifier of the cell and the re-determined identifier of the cell, which cell is updated from an old name to a new name.

In a possible implementation, the first request message is a first interface establishment request message or an IAB configuration update request message.

In a possible implementation, the communication method may further include: receiving a second request message from the first IAB node; and the sending the configuration information to the first IAB node through the second interface includes: sending the configuration information to the first IAB node through the second interface in response to the second request message.

In this embodiment of the present invention, the RAN management network element may send the configuration information of the IAB node to the IAB node only after receiving a request message that is from the IAB node and that is used to request the configuration information of the IAB node. This can prevent the RAN management network element from sending the configuration information to the IAB node when the IAB node does not need the configuration information, so that transmission of unnecessary information can be reduced, thereby saving transmission resources.

In a possible implementation, the second request message includes a quantity of addresses required by the first IAB node and an identifier of the first IAB node.

In this embodiment of the present invention, the RAN management network element may determine address information of the IAB node based on a quantity of addresses required by the IAB node included in the request message. This can ensure that the quantity of the addresses included in the address information sent to the IAB node is just enough for the IAB node to use, thereby preventing insufficiency of the addresses for the IAB node to use, and avoiding a waste of transmission resources due to a large quantity of addresses.

In a possible implementation, the second request message includes second topology information. The second topology information includes a connection relationship between the first IAB node and a parent node and/or a child node of the first IAB node.

In this embodiment of the present invention, the RAN management network element may determine routing information of the IAB node based on topology information included in the request message, so that accuracy of the routing information sent to the IAB node can be ensured, thereby ensuring correct data transmission.

In a possible implementation, the second request message includes an identifier of a cell serving the first IAB node.

In this embodiment of the present invention, the RAN management network element may re-determine cell information for these cells based on identifiers of the cells included in the request message, so that determining unnecessary cell information can be avoided, thereby saving transmission resources. The re-determined cell information may include a resource configuration of the cell. In a case, the re-determined cell information may further include the identifier of the cell, so that the IAB node may determine, based on the identifier of the cell, which resource configuration belongs to which cell. In another case, the re-determined cell information may further include the identifier of the cell and a re-determined identifier of the cell, so that the IAB node may determine, based on the identifier of the cell and the re-determined identifier of the cell, which cell is updated from an old name to a new name. In a possible implementation, the second request message is a second interface establishment request message or an IAB configuration update request message.

A fourth aspect discloses a communication method. The communication method may be applied to a first IAB node, or may be applied to a module (for example, a chip) in the first IAB node. The first IAB node is connected to a first IAB donor through a wireless backhaul link. The first IAB node is connected to a RAN management network element through a second interface. The following uses an example of being applied to the first IAB node for description. The communication method may include: receiving configuration information of the first IAB node from the RAN management network element through the second interface, where the configuration information includes one or more of address information, routing information, and cell information; and obtaining one or more of the address information, the routing information, and the cell information.

In this embodiment of the present invention, an IAB node may receive configuration information of the IAB node from the RAN management network element that manages an IAB donor, and then may transmit data based on the configuration information of the IAB node. It can be learned that the IAB node may obtain address configuration, routing configuration, and cell configuration of the IAB node from the RAN management network element, so that when the IAB node has a service transmission need across a donor network, an IAB donor that manages the IAB node can be prevented from interacting and coordinating with another IAB donor. Therefore, signaling overheads of interaction and coordination among a plurality of IAB donors can be avoided, thereby reducing signaling overheads and saving transmission resources. In addition, because the RAN management network element is located on a RAN side, it takes a short time for information transmission between the IAB node and the RAN management network element. Therefore, an information transmission latency can be reduced, so that time validity of obtaining the configuration information can be improved.

In a possible implementation, the address information includes a BAP layer identifier and/or an IP address.

In a possible implementation, the routing information includes an adaptation layer routing identifier and/or a routing mapping table. The routing mapping table includes the adaptation layer routing identifier and an identifier of a next-hop node.

In a possible implementation, the cell information includes an identifier of a cell and a resource configuration of the cell.

In a possible implementation, the resource configuration of the cell includes one or more of frequency information of the cell, bandwidth information of the cell, and an uplink and downlink duplex mode of the cell.

In a possible implementation, the communication method may further include: sending a second request message to the RAN management network element through the second interface. The second request message is used to request the configuration information.

In this embodiment of the present invention, the IAB node may send, to the RAN management network element, a request message used to request the configuration information, so that the RAN management network element may send the configuration information to the IAB node in response to the request message. This can prevent the RAN management network element from sending the configuration information to the IAB node when the IAB node does not need the configuration information, so that transmission of unnecessary information can be reduced, thereby saving transmission resources.

In a possible implementation, the second request message includes a quantity of addresses required by the first IAB node and an identifier of the first IAB node.

In this embodiment of the present invention, the IAB node may send, to the RAN management network element, a quantity of addresses required by the IAB node, so that the RAN management network element may determine address information of the IAB node based on the quantity of the addresses required by the IAB node. This can ensure that the quantity of the addresses included in the address information sent to the IAB node is just enough for the IAB node to use, thereby preventing insufficiency of the addresses for the IAB node to use, and avoiding a waste of transmission resources due to a large quantity of addresses.

In a possible implementation, the second request message includes second topology information. The second topology information includes a connection relationship between the first IAB node and a parent node and/or a child node of the first IAB node.

In this embodiment of the present invention, the IAB node may send topology information to the RAN management network element, so that the RAN management network element may determine routing information of the IAB node based on the topology information, so that accuracy of the routing information sent to the IAB node can be ensured, thereby ensuring correct data transmission.

In a possible implementation, the second request message includes an identifier of a cell serving the first IAB node.

In this embodiment of the present invention, the IAB node may send, to the RAN management network element, an identifier of a cell whose cell information needs to be updated, so that the RAN management network element may re-determine cell information for these cells based on identifiers of the cells. This can avoid to determine unnecessary cell information, thereby saving transmission resources. The re-determined cell information may include a resource configuration of the cell. In a case, the re-determined cell information may further include the identifier of the cell, so that the IAB node may determine, based on the identifier of the cell, which resource configuration belongs to which cell. In another case, the re-determined cell information may further include the identifier of the cell and a re-determined identifier of the cell, so that the IAB node may determine, based on the identifier of the cell and the re-determined identifier of the cell, which cell is updated from an old name to a new name.

In a possible implementation, the second request message is a second interface establishment request message or an IAB configuration update request message.

A fifth aspect discloses a communication apparatus. The communication apparatus may be a RAN management network element. The RAN management network element may be connected to a first IAB donor through a first interface. The first IAB donor is connected to a first IAB node through a wireless backhaul link. The communication apparatus may include: a determining unit, configured to determine configuration information of the first IAB donor and/or the first IAB node, where the configuration information includes one or more of address information, routing information, and cell information; and a sending unit, configured to send the configuration information to the first IAB donor.

In a possible implementation, the communication apparatus may further include: a receiving unit, configured to receive a request message from the first IAB donor. The sending unit is specifically configured to send the configuration information to the first IAB donor in response to the request message.

In a possible implementation, the address information includes a BAP layer identifier and/or an IP address.

In a possible implementation, the routing information includes an adaptation layer routing identifier and/or a routing mapping table. The routing mapping table includes the adaptation layer routing identifier and an identifier of a next-hop node.

In a possible implementation, the cell information includes an identifier of a cell and a resource configuration of the cell.

In a possible implementation, the resource configuration of the cell includes one or more of frequency information of the cell, bandwidth information of the cell, and an uplink and downlink duplex mode of the cell.

In a possible implementation, the request message includes a quantity of addresses required by the first IAB node and/or the first IAB donor and identifiers/an identifier of the first IAB node and/or the first IAB donor.

In a possible implementation, the request message includes topology information. The topology information includes a connection relationship between the first IAB donor and/or the first IAB node and another node.

In a possible implementation, the request message includes an identifier of a cell serving the first IAB donor and/or the first IAB node.

In a possible implementation, the request message is a first interface establishment request message or an IAB configuration update request message.

A sixth aspect discloses a communication apparatus. The communication apparatus is a first IAB donor. The first IAB donor is connected to a RAN management network element through a first interface. The first IAB donor is connected to a first IAB node through a wireless backhaul link. The communication apparatus may include: a receiving unit, configured to receive configuration information of the first IAB donor and/or the first IAB node from the RAN management network element through the first interface, where the configuration information includes one or more of address information, routing information, and cell information; and an obtaining unit, configured to obtain one or more of the address information, the routing information, and the cell information.

In a possible implementation, the communication apparatus may further include a first sending unit configured to send a request message to the RAN management network element. The request message is used to request the configuration information.

In a possible implementation, the communication apparatus may further include a second sending unit configured to send the configuration information of the first IAB node to the first IAB node.

In a possible implementation, the address information includes a BAP layer identifier and/or an IP address.

In a possible implementation, the routing information includes an adaptation layer routing identifier and/or a routing mapping table. The routing mapping table includes the adaptation layer routing identifier and an identifier of a next-hop node.

In a possible implementation, the cell information includes an identifier of a cell and a resource configuration of the cell.

In a possible implementation, the resource configuration of the cell includes one or more of frequency information of the cell, bandwidth information of the cell, and an uplink and downlink duplex mode of the cell.

In a possible implementation, the request message includes a quantity of addresses required by the first IAB node and/or the first IAB donor and identifiers/an identifier of the first IAB node and/or the first IAB donor.

In a possible implementation, the request message includes topology information. The topology information includes a connection relationship between the first IAB donor and/or the first IAB node and another node.

In a possible implementation, the request message includes an identifier of a cell serving the first IAB donor and/or the first IAB node.

In a possible implementation, the request message is a first interface establishment request message or an IAB configuration update request message.

A seventh aspect discloses a communication apparatus. The communication apparatus is a RAN management network element. The RAN management network element is connected to a first IAB donor through a first interface. The RAN management network element is connected to a first IAB node through a second interface. The first IAB donor is connected to the first IAB node through a wireless backhaul link. The communication apparatus may include: a determining unit, configured to determine configuration information of the first IAB node, where the configuration information includes one or more of address information, routing information, and cell information; and a sending unit, configured to send the configuration information to the first IAB node through the second interface.

In a possible implementation, the sending unit is further configured to send the configuration information to the first IAB donor through the first interface.

In a possible implementation, the determining unit is further configured to determine configuration information of the first IAB donor. The sending unit is further configured to send the configuration information of the first IAB donor to the first IAB donor through the first interface.

In a possible implementation, the address information includes a BAP layer identifier and/or an IP address.

In a possible implementation, the routing information includes an adaptation layer routing identifier and/or a routing mapping table. The routing mapping table includes the adaptation layer routing identifier and an identifier of a next-hop node.

In a possible implementation, the cell information includes an identifier of a cell and a resource configuration of the cell.

In a possible implementation, the resource configuration of the cell includes one or more of frequency information of the cell, bandwidth information of the cell, and an uplink and downlink duplex mode of the cell.

In a possible implementation, the communication apparatus may further include a first receiving unit configured to receive a first request message from the first IAB donor. That the sending unit sends the configuration information of the first IAB donor to the first IAB donor through the first interface includes: sending the configuration information of the first IAB donor to the first IAB donor through the first interface in response to the first request message.

In a possible implementation, the first request message includes a quantity of addresses required by the first IAB donor and an identifier of the first IAB donor.

In a possible implementation, the first request message includes first topology information. The first topology information includes a connection relationship between the first IAB donor and an IAB node.

In a possible implementation, the first request message includes an identifier of a cell serving the first IAB donor.

In a possible implementation, the first request message is a first interface establishment request message or an IAB configuration update request message.

In a possible implementation, the communication apparatus may further include a second receiving unit configured to receive a second request message from the first IAB node. That the sending unit sends the configuration information to the first IAB node through the second interface includes: sending the configuration information to the first IAB node through the second interface in response to the second request message.

In a possible implementation, the second request message includes a quantity of addresses required by the first IAB node and an identifier of the first IAB node.

In a possible implementation, the second request message includes second topology information. The second topology information includes a connection relationship between the first IAB node and a parent node and/or a child node of the first IAB node.

In a possible implementation, the second request message includes an identifier of a cell serving the first IAB node.

In a possible implementation, the second request message is a second interface establishment request message or an IAB configuration update request message.

An eighth aspect discloses a communication apparatus. The communication apparatus is a first IAB node. The first IAB node is connected to a first IAB donor through a wireless backhaul link. The first IAB node is connected to a RAN management network element through a second interface. The communication apparatus may include: a receiving unit, configured to receive configuration information of the first IAB node from the RAN management network element through the second interface, where the configuration information includes one or more of address information, routing information, and cell information; and an obtaining unit, configured to obtain one or more of the address information, the routing information, and the cell information.

In a possible implementation, the address information includes a BAP layer identifier and/or an IP address.

In a possible implementation, the routing information includes an adaptation layer routing identifier and/or a routing mapping table. The routing mapping table includes the adaptation layer routing identifier and an identifier of a next-hop node.

In a possible implementation, the cell information includes an identifier of a cell and a resource configuration of the cell.

In a possible implementation, the resource configuration of the cell includes one or more of frequency information of the cell, bandwidth information of the cell, and an uplink and downlink duplex mode of the cell.

In a possible implementation, the communication apparatus may further include a sending unit configured to send a second request message to the RAN management network element through the second interface. The second request message is used to request the configuration information.

In a possible implementation, the second request message includes a quantity of addresses required by the first IAB node and an identifier of the first IAB node.

In a possible implementation, the second request message includes second topology information. The second topology information includes a connection relationship between the first IAB node and a parent node and/or a child node of the first IAB node.

In a possible implementation, the second request message includes an identifier of a cell serving the first IAB node.

In a possible implementation, the second request message is a second interface establishment request message or an IAB configuration update request message.

A ninth aspect discloses a communication apparatus. The communication apparatus may include a processor, a memory, an input interface, and an output interface. The input interface is configured to receive information from another communication apparatus other than the communication apparatus. The output interface is configured to output information to the another communication apparatus other than the communication apparatus. When the processor executes a computer program stored in the memory, the processor is enabled to perform the communication method disclosed in any one of the first aspect or the implementations of the first aspect.

A tenth aspect discloses a communication apparatus. The communication apparatus may include a processor, a memory, an input interface, and an output interface. The input interface is configured to receive information from another communication apparatus other than the communication apparatus. The output interface is configured to output information to the another communication apparatus other than the communication apparatus. When the processor executes a computer program stored in the memory, the processor is enabled to perform the communication method disclosed in any one of the second aspect or the implementations of the second aspect.

An eleventh aspect discloses a communication apparatus. The communication apparatus may include a processor, a memory, an input interface, and an output interface. The input interface is configured to receive information from another communication apparatus other than the communication apparatus. The output interface is configured to output information to the another communication apparatus other than the communication apparatus. When the processor executes a computer program stored in the memory, the processor is enabled to perform the communication method disclosed in any one of the third aspect or the implementations of the third aspect.

A twelfth aspect discloses a communication apparatus. The communication apparatus may include a processor, a memory, an input interface, and an output interface. The input interface is configured to receive information from another communication apparatus other than the communication apparatus. The output interface is configured to output information to the another communication apparatus other than the communication apparatus. When the processor executes a computer program stored in the memory, the processor is enabled to perform the communication method disclosed in any one of the fourth aspect or the implementations of the fourth aspect.

A thirteenth aspect discloses a communication system. The communication system includes the communication apparatus in the ninth aspect and the communication apparatus in the tenth aspect, or the communication system includes the communication apparatus in the eleventh aspect and the communication apparatus in the twelfth aspect.

A fourteenth aspect discloses a computer readable storage medium. The computer readable storage medium stores a computer program or computer instructions. When the computer program or the computer instructions are run, the communication methods disclosed in the foregoing aspects are implemented.

A fifteenth aspect discloses a chip. The chip includes a processor configured to execute a program stored in a memory. When the program is executed, the chip is enabled to perform the foregoing methods.

In a possible implementation, the memory is located outside the chip.

A sixteenth aspect discloses a computer program product. The computer program product includes computer program code. When the computer program code is run, the foregoing communication methods are performed.

### BRIEF DESCRIPTION OF DRAWINGS

FIG. 1 is a schematic diagram of standalone IAB networking according to an embodiment of the present invention;
FIG. 2 is a schematic diagram of non-standalone IAB networking according to an embodiment of the present invention;
FIG. 3 is a schematic diagram of a user plane protocol according to an embodiment of the present invention;
FIG. 4 is a schematic diagram of a control plane protocol according to an embodiment of the present invention;
FIG. 5 is a schematic diagram of a connection between an IAB node and an OAM device according to an embodiment of the present invention;
FIG. 6 is a schematic diagram of an application scenario of an IAB network according to an embodiment of the present invention;
FIG. 7 is a schematic diagram of a network architecture according to an embodiment of the present invention;
FIG. 8 is a schematic diagram of another network architecture according to an embodiment of the present invention;
FIG. 9 is a schematic flowchart of a communication method according to an embodiment of the present invention;
FIG. 10 is a schematic diagram of a control plane protocol stack of a first interface between a RAN management network element and a first IAB donor according to an embodiment of the present invention;
FIG. 11 is a schematic diagram of obtaining address information by an IAB donor according to an embodiment of the present invention;
FIG. 12 is a schematic diagram of obtaining routing information by an IAB donor according to an embodiment of the present invention;
FIG. 13 is a schematic diagram of obtaining cell information by an IAB donor according to an embodiment of the present invention;
FIG. 14 is a schematic flowchart of another communication method according to an embodiment of the present invention;
FIG. 15 is a schematic flowchart of still another communication method according to an embodiment of the present invention;
FIG. 16 is a schematic flowchart of still another communication method according to an embodiment of the present invention;
FIG. 17 is a schematic flowchart of still another communication method according to an embodiment of the present invention;
FIG. 18 is a schematic diagram of a structure of a communication apparatus according to an embodiment of the present invention;
FIG. 19 is a schematic diagram of a structure of another communication apparatus according to an embodiment of the present invention;
FIG. 20 is a schematic diagram of a structure of still another communication apparatus according to an embodiment of the present invention; and
FIG. 21 is a schematic diagram of a structure of still another communication apparatus according to an embodiment of the present invention.

### DESCRIPTION OF EMBODIMENTS

Embodiments of the present invention disclose a communication method, apparatus, and system, to save transmission resources. Details are separately described below.

To better understand embodiments of the present invention, the following first describes related technologies in embodiments of the present invention.

Compared with a 4^{th} generation mobile communication (4^{th} generation mobile communication, 4G) system, a 5^{th} generation mobile communication (5G) system imposes stricter requirements on network performance indicators. For example, the 5^{th} generation mobile communication system requires a capacity indicator to be increased by 1000 times, a wider coverage, and ultra-high reliability, an ultra-low latency, and the like. Considering that there are abundant high-frequency carrier frequency resources, in a hotspot area, to meet an ultra-high capacity requirement of 5G, networking using high-frequency small cell is increasingly popular. A high-frequency carrier has a poor propagation characteristic, is severely attenuated by obstacles, and has small coverage. Therefore, a large quantity of small cells need to be densely deployed. Correspondingly, costs of providing optical fiber backhaul for the large quantity of the densely deployed small cells are high, and construction is difficult. Therefore, an economical and convenient backhaul solution is required. In addition, when network coverage is required in some remote areas to meet a requirement for wide coverage, optical fiber deployment is difficult and costly. Therefore, flexible and convenient access and backhaul solutions are also required. To resolve the foregoing problems, an IAB technology in which both an access link and a backhaul link use wireless transmission is introduced in the industry.

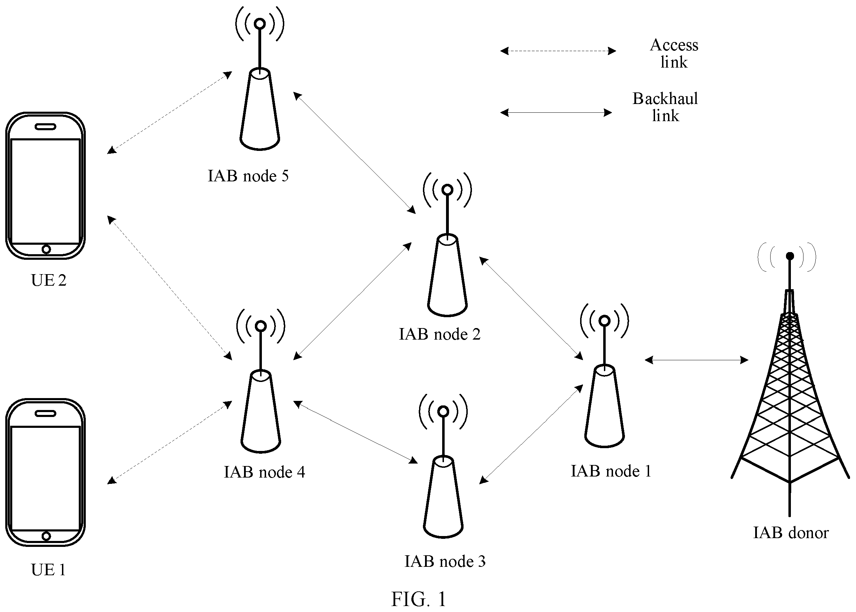

Refer to FIG. 1. FIG. 1 is a schematic diagram of standalone IAB networking according to an embodiment of the present invention. As shown in FIG. 1, an IAB network may include user equipment (user equipment, UE), IAB nodes (nodes), and an IAB donor (donor). The IAB node may also be referred to as a relay node (relay node, RN), and may provide a radio access service for the UE. The IAB node may include a mobile terminal (mobile terminal, MT) part and a distributed unit (distributed unit, DU) part. When the IAB node faces a parent node of the IAB node, the IAB node may serve as a terminal device, that is, a role of an MT. When the IAB node faces a child node of the IAB node, the IAB node is considered as a network device, that is, a role of a DU. The MT part of the IAB node has some or all functions of the UE. A child node of an IAB node may be another IAB node, or may be UE. The IAB donor may also be referred to as a donor node (donor node) or a donor gNodeB (donor gNodeB, DgNB). The donor gNodeB may be an access network device having a complete base station function, or may be an access network device in a form in which a central unit (central unit, CU) and a DU are separated. For ease of description, a CU of the IAB donor may be referred to as an IAB donor CU or CU for short, and a DU of the IAB donor may be referred to as an IAB donor DU for short. The IAB donor CU may alternatively be in a form in which a control plane (control plane, CP) and a user plane (user plane, UP) are separated. For example, the CU may include one CU-CP and one or more CU-UPs. Service data of the UE may be sent by the IAB node to the IAB donor through a wireless backhaul link. The IAB donor may be connected to a core network element that serves the UE, and provide a wireless backhaul function for the IAB node.

In a current 5G standard, considering small coverage a high frequency bands, to ensure network coverage performance, multi-hop networking may be used in an IAB network. In addition, considering a requirement of service transmission reliability, the IAB node may be enabled to support dual connectivity (dual connectivity, DC) or multi-connectivity (multi-connectivity), to cope with a possible exception occurring on a backhaul link, such as link interruption or blockage (blockage) and load fluctuation, to improve transmission reliability. Therefore, the IAB network may support the multi-hop networking, and may further support multi-connectivity networking. There is at least one transmission path including a plurality of links between the UE served by the IAB node and the IAB donor. A transmission path may include a plurality of nodes. For example, a transmission path may include UE, one or more IAB nodes, and an IAB donor. When the CU and the DU of the IAB donor are separated, a transmission path may further include an IAB donor DU part and an IAB donor CU part.

Each IAB node considers an adjacent node that provide access and backhaul services for the IAB node as a parent node. Accordingly, each IAB node may be considered as a child node of the parent node. For example, in FIG. 1, a parent node of an IAB node 1 is an IAB donor. The IAB node 1 is a parent node of an IAB node 2 and an IAB node 3. Both the IAB node 2 and the IAB node 3 are parent nodes of an IAB node 4. A parent node of an IAB node 5 is the IAB node 2.

An uplink data packet of the UE may be transmitted to the IAB donor via one or more IAB nodes, and then sent by the IAB donor to a mobile gateway device, for example, a user plane function (user plane function, UPF) network element in a 5G core. A downlink data packet of the UE is received by the IAB donor from the mobile gateway device, and then sent to the UE through the IAB node. FIG. 1 shows a standalone (standalone, SA) IAB networking scenario. The IAB node and the UE are each connected to a network only through an air interface in a new radio (new radio, NR) standard.

It should be understood that the standalone IAB networking scenario shown in FIG. 1 is merely an example, and there are more other possibilities in an IAB scenario of a combination of multi-hop and multi-connectivity. For example, an IAB donor in FIG. 1 and an IAB node connected to another IAB donor form dual connectivity to serve the UE, that is, the UE supports dual connectivity. Connection 1 directly accesses a cell served by the IAB donor DU. Another connection 2 establishes a connection to an IAB node X. An IAB donor connected to the IAB node X is different from an IAB donor corresponding to the UE connection 1. Details are not listed herein.

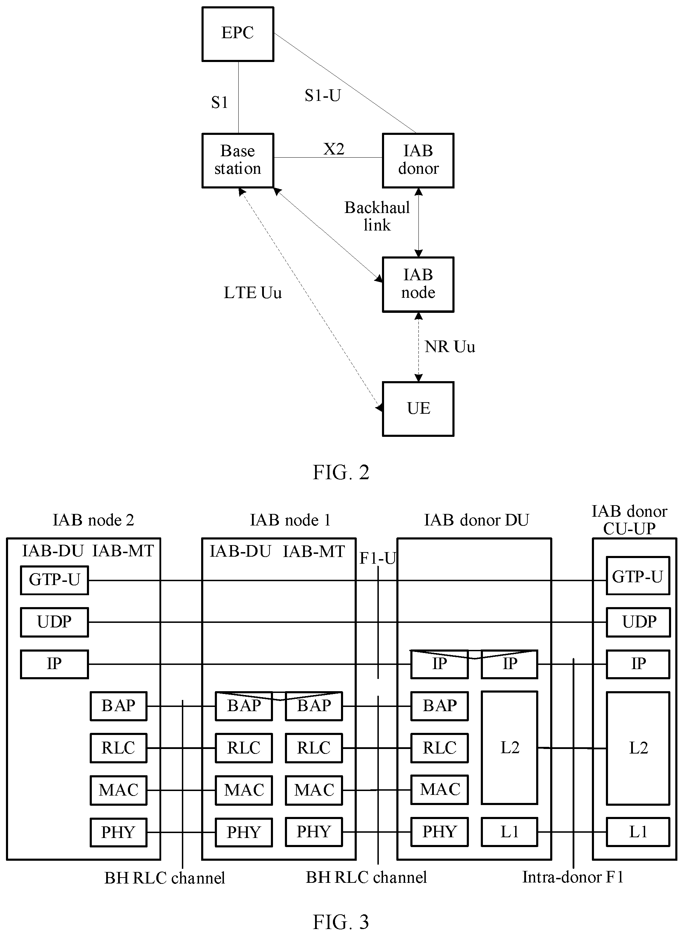

In addition to SA networking, the IAB network also supports non-standalone (non-standalone, NSA) networking. Refer to FIG. 2. FIG. 2 is a schematic diagram of non-standalone IAB networking according to an embodiment of the present invention. As shown in FIG. 2, an IAB node supports dual connectivity of 4G and 5G networks, that is, evolved universal terrestrial radio access network (evolved universal terrestrial radio access network, E-UTRAN) NR dual connectivity (E-UTRAN NR dual connectivity, EN-DC). A long term evolution (long term evolution, LTE) base station is a master eNodeB (master eNB, MeNB), provides an LTE air interface (that is, an LTE Uu interface) connection for UE, and performs user plane and control plane transmission with a 4G core (that is, an evolved packet core (evolved packet core, EPC)) through an S1 interface. An IAB donor is a secondary base station, provides an NR air interface (that is, an NR Uu interface) connection for the IAB node, and performs user plane transmission with a core network through an S1-U interface. Similarly, the UE also supports EN-DC. The UE may be connected to the MeNB through the LTE Uu interface, and may be connected to the secondary base station through the NR Uu interface.

It should be noted that the non-standalone IAB networking shown in FIG. 2 is merely a networking example, and an NSA scenario of the IAB network also supports multi-hop IAB networking. For example, the UE in FIG. 2 may be another IAB node. To be specific, an IAB node may be connected to the IAB donor gNodeB through a multi-hop wireless backhaul link. The non-standalone IAB networking scenario in the present invention may also be referred to as an IAB EN-DC networking scenario.

In current discussion of the IAB network, it is determined to introduce a new protocol layer, that is, a BAP layer, to a wireless backhaul link. The BAP layer is located above a radio link control (radio link control, RLC) layer, and may be configured to implement functions such as routing of a data packet on the wireless backhaul link and bearer mapping.

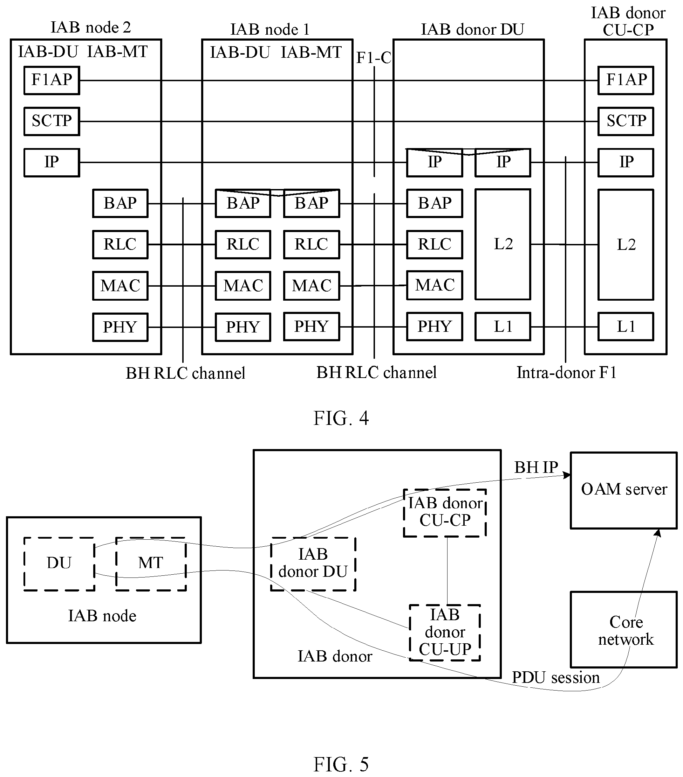

An F1 interface needs to be established between an IAB node (that is, a DU part of the IAB node) and an IAB donor (or an IAB donor CU). The F1 interface may also be referred to as an F1* interface. In the present invention, the F1 interface may be collectively referred to as an F1 interface, but a name is not limited. The F1 interface supports a user plane protocols (F1-U) and a control plane protocols (F1-C). Refer to FIG. 3. FIG. 3 is a schematic diagram of a user plane protocol according to an embodiment of the present invention. As shown in FIG. 3, the user plane protocol of the F1 interface may include one or more of protocol layers such as a general packet radio service (general packet radio service, GPRS) tunneling protocol user plane (GPRS tunneling protocol user plane, GTP-U) layer, a user datagram protocol (user datagram protocol, UDP) layer, and an IP layer. The IAB node and the IAB donor DU may include a BAP, an RLC layer protocol, a media access control (media access control, MAC) layer protocol, and a physical (physical, PHY) layer protocol. The IAB donor DU and an IAB donor CU-UP may further include an L2 layer protocol and an L1 layer protocol. Refer FIG. 4. FIG. 4 is a schematic diagram of a control plane protocol according to an embodiment of the present invention. As shown in FIG. 4, the control plane protocol of the F1 interface may include one or more of protocol layers such as an F1 application protocol (F1 application protocol, F1AP) layer, a stream control transport protocol (stream control transport protocol, SCTP) layer, and an IP layer. For other descriptions, refer to descriptions in FIG. 3. Communication between the IAB nodes as well as between the IAB node and the IAB donor DU may be performed through a backhaul (backhaul, BH) RLC channel (channel). The IAB donor DU and the IAB donor CU-UP/CP may communicate with each other through an intra-donor F1 (intra-donor F1). The IAB node may communicate with the IAB donor CU-UP through an F1-U interface. The IAB node may communicate with the IAB donor CU-UP through an F1-C interface.

It should be understood that the L1 layer and the L2 layer usually refer to protocol layers for wired communication. For example, the L1 layer may include a physical layer, and the L2 layer may include a data link layer. The L2 layer may further include one or more of a MAC layer, a logical link control (logical link control, LLC) layer, a point to point protocol (point to point protocol, PPP) layer, a link layer of an Ethernet (Ethernet) technology, and the like. The foregoing is merely an example of specific protocol layers included in the L1 layer and the L2 layer, and does not constitute a limitation on the specific protocol layers included in the L1 layer and the L2 layer.

With the use of the control plane of the F1 interface, interface management may be performed between the IAB node and the IAB donor, the DU part of the IAB node may be managed, UE context related configuration may be performed, and the like. With the use of the user plane of the F1 interface, functions such as user plane data transmission and downlink transmission status feedback may be performed between the IAB node and the IAB donor.

Currently, a topology management function in an IAB network is in the IAB donor CU-CP. One IAB donor has only one CU-CP, and the CU-CP can only perform topology management in the IAB donor. The topology management includes BAP layer identifier allocation of a node, BAP path (path) identifier (identifier, ID) allocation of a routing path, and the like. Operation, administration, and maintenance (operation, administration, and maintenance, an OAM device) is mainly responsible for management and configuration of an IAB-DU cell. Refer to FIG. 5. FIG. 5 is a schematic diagram of a connection between an IAB node and an OAM device according to an embodiment of the present invention. As shown in FIG. 5, the IAB node may be connected to an OAM server (server) in two different manners. In one manner, an IP packet of an OAM service is transmitted as a non-F1 interface service on a BH link in a BH IP manner. In the other manner, a protocol data unit (protocol data unit, PDU) session (session) established by an MT part of the IAB node is used to carry an OAM service of a DU part of the same IAB node. This manner requires participation of a core network element connected to the MT part of the IAB node. In addition, the IAB donor CU (or the IAB donor CU-CP) may also participate in a resource configuration of the IAB-DU cell. For example, the IAB donor CU may perform uplink and downlink configuration at a granularity of a slot (slot)/symbol (symbol), availability attribute configuration, and the like on a cell in a time division duplexing (time division duplexing, TDD) mode of the IAB-DU. The uplink and downlink configuration may include downlink (downlink) configuration, uplink (uplink) configuration, and flexible (flexible) configuration. The availability attribute configuration may be hard (hard), soft (soft), or not available (not available).

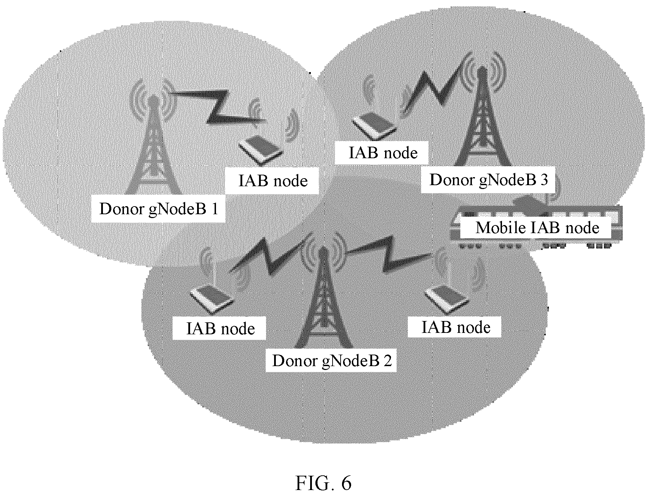

Refer to FIG. 6. FIG. 6 is a schematic diagram of an application scenario of an IAB network according to an embodiment of the present invention. As shown in FIG. 6, two scenarios are considered in the IAB network. In one scenario, an IAB node located at a coverage edge of an IAB donor may be simultaneously connected to parent nodes in a management range of a plurality of different IAB donors, to establish backhaul links, and may provide an access and backhaul service for UE or another IAB node by using backhaul networks in a control range of the plurality of different IAB donors. In the other scenario, considering mobility of the IAB node, a mobile IAB node may be switched between different IAB donors.

In the foregoing two scenarios, problems such as the IAB-DU cell configuration, IP address management, BAP address management, and BAP routing (routing) ID configuration need to be considered, to ensure correct data transmission when the IAB node receives services from different IAB donors, so that an identifier conflict between a cell served by the IAB-DU and a surrounding cell can be avoided. The IAB-DU cell configuration may include identifier allocation of a cell (cell) of a DU, a resource configuration of the cell of the DU, meeting a duplex constraint, and the like.

Currently, a topology management function in an IAB network is performed by an IAB donor (which may be specifically an IAB donor CU or an IAB donor CU-CP), and only topology management in the IAB donor can be performed. For example, an IAB donor allocates a BAP routing ID in a management range of the IAB donor, to ensure that a transmission path to a destination node is uniquely identified in the donor range. When the IAB node is in coverage of different IAB donors, if two IAB donors CU-CPs configure a same BAP routing ID for IAB nodes managed by the two IAB donors, but the BAP routing ID actually identifies different transmission paths to different target nodes, when the BAP routing ID has a common node on two different paths identified in networks managed by the two IAB donors, when a data packet carrying the BAP routing ID is transmitted to this or these common nodes, the data packet cannot be normally routed, and an error may occur. Therefore, in the foregoing two scenarios, to enable the IAB node to work normally, in a possible manner, coordination and interaction need to be performed among different IAB donor CU-CPs. Consequently, signaling overheads are high, leading to a waste of transmission resources. In addition, because a latency of the coordination and the interaction cannot be ignored, a latency of data transmission is high.

In addition, because the OAM device is mainly responsible for the management and configuration of the IAB-DU cell, in a process of performing a handover between IAB donors by the IAB node, configurations (for example, a cell global identifier (cell global identifier, CGI)) of some cells change. However, depending on an update of configuration of an OAM cell, either the configuration needs to be frequently obtained from the OAM device in the handover process, and time validity is poor, or a plurality of sets of possible configurations need to be preconfigured, application scenarios are limited (based on an accurate prediction), and signaling overheads of initial configuration are very high. When the OAM device configures a plurality of sets of possible configurations, the OAM device needs to predict movement of the IAB node in advance.

It can be learned that it is necessary to provide a simple and efficient manner of topology management and IAB cell management, to facilitate management of IAB nodes located at boundaries of two or more IAB donors and IAB nodes with mobility, to reduce signaling interaction between the IAB donors and provide necessary configuration information for the IAB nodes in time.

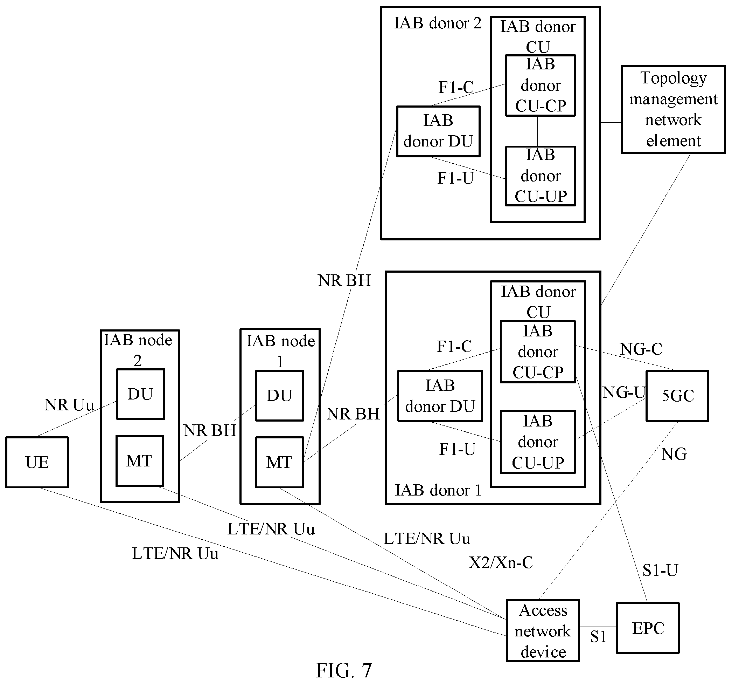

To better understand embodiments of the present invention, the following first describes a network architecture used in embodiments of the present invention. Refer to FIG. 7. FIG. 7 is a schematic diagram of a network architecture according to an embodiment of the present invention. As shown in FIG. 7, the network architecture may include one or more UE (in which one UE is shown in the figure), one or more IAB nodes (in which two IAB nodes are shown in the figure), a plurality of IAB donors, an access network device, a radio access network (radio access network, RAN) management network element, and a core network device. The UE may communicate with the IAB node through an NR Uu interface. When the access network device is an access network device in LTE, communication between the UE and the access network device as well as between the IAB node and the access network device may be performed through an LTE Uu. When the access network device is an access network device in NR, communication between the UE and the access network device as well as between the IAB node and the access network device may be performed through the NR Uu. Communication between the IAB nodes as well as between the IAB node and the IAB donor may be performed by using NR BH. The core network device may include a 5G core (5G core, SGC) and an EPC. Communication between the IAB donor and the 5GC as well as between the access network device and the 5GC may be performed by using NG. Communication between the IAB donor and the EPC as well as between the access network device and the EPC may be performed by using S1. When the access network device is an access network device in LTE, the IAB donor may communicate with the access network device by using X2-C. When the access network device is an access network device in NR, the IAB donor may communicate with the access network device by using Xn-C.

When the IAB node works in SA mode, the IAB node may establish single connectivity to one parent node, or may establish dual connectivity to two parent nodes. The two parent nodes may be controlled by a same IAB donor, or may be controlled by different IAB donors. An F1 interface needs to be established between a DU part of the IAB node and the IAB donor. The IAB donor may be connected to the 5GC. An IAB donor CU-CP may be connected to a control plane network element in the 5GC, for example, an access and mobility management function AMF (access and mobility management function, AMF) network element, through an NG control plane interface. The IAB donor CU-UP may be connected to a user plane network element in the 5GC, for example, a UPF network element, through an NG user plane interface.

When the IAB node works in an NSA mode (or an EN-DC mode), the IAB donor CU-UP may be connected to the EPC (for example, a serving gateway (serving gateway, SGW)) through an S1 user plane interface.

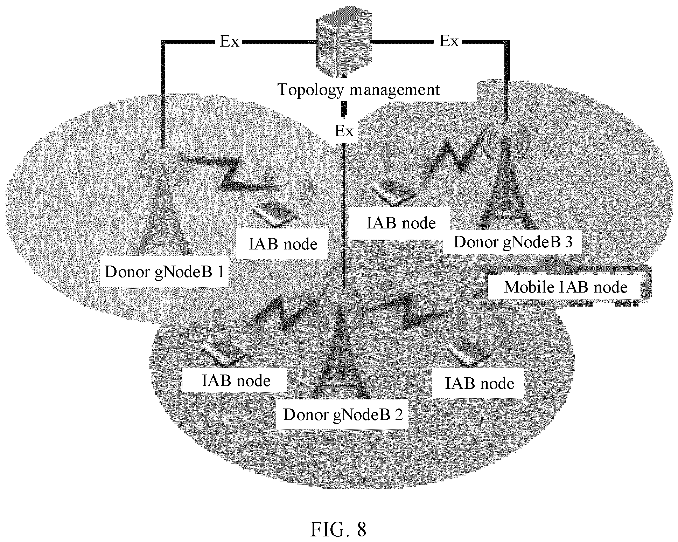

Refer to FIG. 8. FIG. 8 is a schematic diagram of another network architecture according to an embodiment of the present invention. As shown in FIG. 8, the network architecture may include a plurality of IAB nodes (in which two IAB nodes are shown in the figure), a plurality of donor gNodeBs (that is, IAB donors), and a RAN management network element. The RAN management network element may communicate with the donor gNodeB through an Ex interface.

UE may also be referred to as a terminal device, a mobile station (mobile station, MS), a mobile terminal (mobile terminal, MT), or the like, and is a device that provides voice and/or data connectivity for a user. The terminal device may be a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handheld), a laptop computer (laptop computer), a cordless phone (cordless phone) or a wireless local loop (wireless local loop, WLL) station, a machine type communication (machine type communication, MTC) terminal, a wearable device (such as a smartwatch, a smart band, and a pedometer), an in-vehicle device (such as a car, a bicycle, an electric vehicle, an airplane, a ship, a train, and a high-speed railway), a virtual reality (virtual reality, VR) device, an augmented reality (augmented reality, AR) device, a wireless terminal in industrial control (industrial control), a smart home device (such as a refrigerator, a television, an air conditioners, and an electric meter), a smart robot, a workshop device, a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), or a wireless terminal in smart home (smart home), a flight device (such as a smart robot, a hot air balloon, a drone, or an airplane), or another device that can access a network.

The IAB node is configured to provide an access service and a backhaul service for a child node or the UE.

The IAB donor is an access network device that supports the IAB node.

A 5GC is configured to perform authentication, mobility management, PDU session management, and the like on the UE, and includes functional entities or network elements such as an AMF network element and a UPF network element.

An EPC is configured to perform authentication, mobility management, packet data network (packet data network, PDN) connection management, and the like on the UE, and includes network elements such as a mobility management entity (mobility management entity, MME) and a packet data gateway (PDN gateway, PGW).

The RAN management network element is a newly introduced network element, and may perform topology management, cell management, and the like for the IAB node of one or more IAB donors. The RAN management network element may establish a communication interface with the one or more IAB donors. The communication interface may be an Ex interface, or may have another name. A name of the communication interface is not limited in the present invention. A first interface is used as an example for description in the present invention. The RAN management network element may also have another name. A name of the RAN management network element is not limited in the present invention. The RAN management network element is used as an example for description in the present invention.

It should be understood that the RAN management network element may be an independent network element or entity, or may be a logical network element. The logical network element may be disposed in an IAB donor.

It should be noted that system architectures shown in FIG. 7 and FIG. 8 are not limited to including only the network elements and devices shown in the figures, and may further include other network elements or devices that are not represented in the figures. Details are not listed herein in the present invention.

To better understand embodiments of the present invention, symbols and terms used in embodiments of the present invention may be first described.

An access IAB node is an IAB node directly connected to a terminal device, that is, an IAB node accessed by a terminal device. An intermediate IAB node is an IAB node that provides a wireless backhaul service for another IAB node, that is, an IAB node located between an access IAB node and an IAB donor in a path. For example, in a path of the IAB donor → the IAB node 1 → the IAB node 3 → the IAB node 4 shown in FIG. 1, the IAB node 4 is an access IAB node, and the IAB node 1 and the IAB node 3 are intermediate IAB nodes.

It may be understood that for an IAB node, for a terminal device accessing a cell served by the IAB node, the IAB node is a role of accessing the IAB node. For a child/grandchild IAB node of the IAB node or a terminal device accessing a cell served by the child/grandchild IAB node, the IAB node is a role of an intermediate IAB node.

A child node of a first IAB node is a node that is directly connected to the first IAB node and that is located in a downstream of the first IAB node, that is, a node that directly accesses a cell served by the first IAB node. A grandchild node of the first IAB node is a node that is indirectly connected to the first IAB node and that is located in the downstream of the first IAB node, for example, a node that accesses a cell served by the child node of the first IAB node, or a node that is in the downstream of the first IAB node and that is connected to the first IAB node through wireless backhaul links having at least two hops. The child node and the grandchild node each may be considered as subordinate nodes of the first IAB node. The child node of the first IAB node and the grandchild node of the first IAB node may be an IAB node, or may be a terminal device. A parent node of the first IAB node is a node that is directly connected to the first IAB node and that is located in an upstream of the first IAB node, that is, a node that directly provides an access service for the first IAB node. The first IAB node accesses a cell served by the parent node of the first IAB node. The parent node of the first IAB node may be an IAB node, or may be an IAB donor. For example, in FIG. 1, the parent node of the IAB node 2 is the IAB node 1. Child nodes of the IAB node 2 are the IAB node 4 and the IAB node 5. Grandchild nodes of the IAB node 2 are UE 1 and UE 2. For another example, in FIG. 1, the parent node of the IAB node 1 is the IAB donor. Child nodes of the IAB node 1 are the IAB node 2 and the IAB node 3. Grandchild nodes of the IAB node 1 are the IAB node 4, the IAB node 5, the UE 1, and the UE 2. A node in a downstream of the IAB node is a node that establishes a connection to the IAB donor through the IAB node. A node in an upstream of the IAB node may include a node that is located on a link between the IAB node and the IAB donor and that is closer to the IAB donor, and may alternatively include the IAB donor.

A next-hop node of a first IAB donor/first IAB node is a node that is in a path including the first IAB donor/first IAB node and that first receives a data packet after the first IAB donor/first IAB node. The next-hop node of the first IAB donor/first IAB node may also be referred to as a next-hop node of the data packet.

A symbol "/" indicates "or".

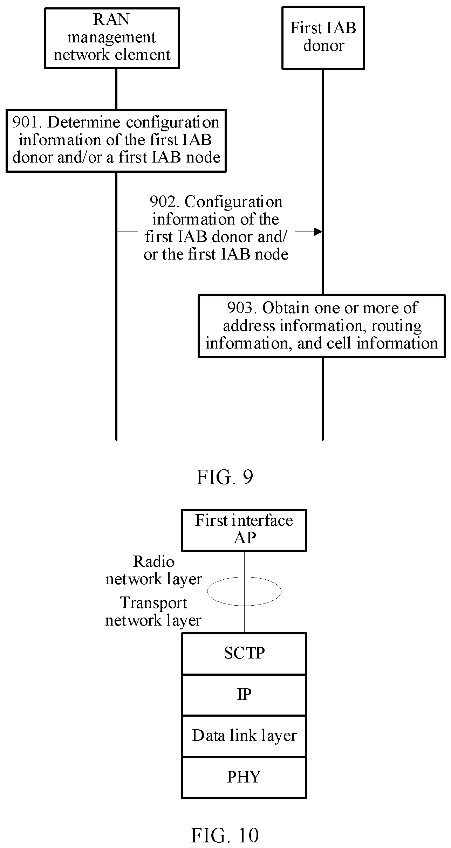

Based on the foregoing network architectures, refer to FIG. 9. FIG. 9 is a schematic flowchart of a communication method according to an embodiment of the present invention. As shown in FIG. 9, the communication method may include the following steps.

A RAN management network element may be connected to a plurality of IAB donors through a first interface. This may be understood as that the RAN management network element may manage one or more IAB donors through the first interface. Alternatively, this may be understood that there are a plurality of IAB donors in a management range of the RAN management network element. A first IAB donor may be connected to one or more terminal devices by using one or more IAB nodes. This may be understood as that a first IAB donor may be connected to one or more terminal devices by using one or more IAB nodes managed by the first IAB donor. Alternatively, it may be understood as that a first IAB donor may be connected to one or more terminal devices by using one or more IAB nodes in a management range of the first IAB donor. The first IAB donor is any one of the plurality of IAB donors connected to the RAN management network element, and may be understood as any one of the plurality of IAB donors managed by the RAN management network element, or may be understood as any one of the plurality of IAB donors in a management range of the RAN management network element.

The first IAB donor may be connected to a first IAB node through a wireless backhaul link, or may be connected through a wireless backhaul link having one hop. In other words, the first IAB donor is directly connected to the first IAB node. That is, there is no other IAB node between the first IAB donor and the first IAB node. Alternatively, the first IAB donor and the first IAB node may be indirectly connected through a wireless backhaul link having multi-hops. In other words, the first IAB donor is indirectly connected to the first IAB node. That is, there is another IAB node between the first IAB donor and the first IAB node. The first IAB node is an IAB node connected to the first IAB donor, and another IAB node connected to the first IAB donor is similar to the first IAB node. The following uses the first IAB node as an example for description. It should be understood that the first IAB node is an IAB node in the management range of the first IAB donor, that is, an IAB node managed by the first IAB donor.

That the first IAB donor is connected to the first IAB node may be understood as that the first IAB donor is directly connected to the first IAB node. That is, there is no other IAB node between the first IAB donor and the first IAB node. Alternatively, it may be understood as that the first IAB donor is indirectly connected to the first IAB node. That is, there is another IAB node between the first IAB donor and the first IAB node. For example, the IAB donor in FIG. 1 is directly connected to the IAB node 1, and the IAB donor in FIG. 1 is indirectly connected to the IAB node 2 and the IAB node 3.

Refer to FIG. 10. FIG. 10 is a schematic diagram of a control plane protocol stack of a first interface between a RAN management network element and a first IAB donor according to an embodiment of the present invention. As shown in FIG. 10, the control plane protocol stack of the first interface between the RAN management network element and the first IAB donor may include a radio network layer (radio network layer) and a transport network layer (transport network layer). The radio network layer may include a first interface application protocol (application protocol, AP) layer. The transport network layer may include a PHY layer, a data link layer (data link layer), an IP layer, and an SCTP layer. The first interface AP layer is a newly introduced protocol layer, and is mainly configured for first interface management, various configurations and updates of an IAB network, maintenance of context information of nodes in the IAB network, and the like.

901. The RAN management network element determines configuration information of the first IAB donor and/or the first IAB node.

When the first IAB donor and/or the first IAB node needs the configuration information, the RAN management network element may determine the configuration information of the first IAB donor and/or the first IAB node. This may be understood as determining the configuration information of the first IAB donor, or may be understood as determining the configuration information of the first IAB node, or may be understood as determining the configuration information of the first IAB donor and the first IAB node. The configuration information of the first IAB donor may include one or more of address information, routing information, and cell information of the first IAB donor. The configuration information of the first IAB node may include one or more of address information, routing information, and cell information of the first IAB node. When a request message that is from the first IAB donor and that is used to request the configuration information of the first IAB donor and/or the first IAB node is received, or topology information of the first IAB donor and/or the first IAB node is obtained, or updated topology information of the first IAB donor and/or the first IAB node is obtained, it may be determined that the first IAB donor and/or the first IAB node needs the configuration information.

The address information may include a BAP layer identifier and/or an IP address. The address information of the first IAB donor includes a BAP layer identifier, but does not include an IP address. The address information of the first IAB node may include a BAP layer identifier and/or an IP address. This may be understood as including a BAP layer identifier, or may be understood as including an IP address, or may be understood as including both a BAP layer identifier and an IP address. The BAP layer identifier may be a BAP address (address), or may be other information that can uniquely identify a BAP layer of the first IAB donor or the first IAB node. It can be learned that an IP address is configured for an IAB node, and may be an IPv4 address, an IPv6 address, an IPv6 address prefix, or another IP address. This is not limited herein. When a CU and a DU of the first IAB donor are separated, the configuration information of the first IAB donor may be understood as configuration information of the first IAB donor DU.

The routing information may include an adaptation layer routing identifier (that is, a BAP routing ID) and/or a routing mapping table. The routing information of the first IAB donor and/or the first IAB node may include an adaptation layer routing identifier and/or a routing mapping table. When the first IAB node is an intermediate IAB node, the routing information of the first IAB node may include the routing mapping table, and may not include the adaptation layer routing identifier. When the first IAB node is an access IAB node, the routing information of the first IAB node may include the adaptation layer routing identifier. In addition, the routing information of the first IAB node may further include the routing mapping table. When the first IAB node is an access IAB node, if the routing information of the first IAB node does not include the routing mapping table, a default (default) route of the first IAB node may be determined as the routing mapping table of the first IAB node. The default route includes only one default BAP routing ID. The default BAP routing ID may point to a default transmission path. A next-hop node of the first IAB node in the default transmission path may be a parent node that is of parent nodes of the first IAB node and that serves a master cell group (MCG) accessed by the first IAB node. The routing information of the first IAB donor may include an adaptation layer routing identifier. In addition, the routing information of the first IAB donor may further include the routing mapping table.

The adaptation layer routing identifier is used to identify a transmission path to a destination node. The adaptation layer routing identifier may include a BAP layer identifier (such as a BAP address) and a BAP layer path identifier (that is, a BAP path ID) of the destination node. The destination node herein may be a destination node of a data packet on a wireless backhaul link, may be an IAB node, may be an IAB donor, or may be a terminal device. When the CU and the DU of the first IAB donor are separated, the destination node may alternatively be the IAB donor DU.

For example, for the standalone IAB networking shown in FIG. 1, the RAN management network element may separately configure different path identifiers for two different downlink transmission paths between the IAB donor and the IAB node 4. For example, the RAN management network element may configure a BAP path ID 1 for a path of the IAB donor → the IAB node 1 → the IAB node 3 → the IAB node 4, and may configure a BAP path ID 2 for a path of the IAB donor → the IAB node 1 → the IAB node 2 → the IAB node 4. The RAN management network element may obtain, with reference to a BAP layer identifier of the destination node IAB node 4 corresponding to the two transmission paths, that adaptation layer routing identifiers pointing to the two transmission paths are respectively a BAP routing ID 1 and a BAP routing ID 2. Each BAP routing ID includes a BAP layer identifier of a transmission destination node and a BAP layer path identifier BAP path ID to the destination node.

The routing mapping table may include the adaptation layer routing identifier (BAP routing ID) and an identifier of a next-hop node. The routing mapping table of the first IAB donor may include the adaptation layer routing identifier of the first IAB donor and an identifier of a next-hop node. The next-hop node of the first IAB donor may be an IAB node.

The routing mapping table of the first IAB node may include the adaptation layer routing identifier of the first IAB node and an identifier of a next-hop node. The next-hop node of the first IAB node may be an IAB node, the IAB donor (or an IAB donor DU), or a terminal device.

When the next-hop node is an IAB node, the identifier of the next-hop node may be a BAP layer identifier of the IAB node, or may be an IP address of the IAB node, or may be other information that can uniquely identify the IAB node.

When the next-hop node is a terminal device, the identifier of the next-hop node may be an identifier of the terminal device, or may be other information that can uniquely identify the terminal device.

When the next-hop node is the IAB donor, the identifier of the next-hop node may be a BAP layer identifier of the IAB donor, or may be other information that can uniquely identify the IAB donor (for example, an IP layer identifier of the IAB donor). When the next-hop node is an IAB donor DU, the identifier of the next-hop node may be a BAP layer identifier of the IAB donor DU, or may be other information that can uniquely identify the IAB donor DU, for example, an IP layer identifier of the IAB donor. A signaling structure of the routing mapping table determined by the RAN management network element may be:
>IAB node/IAB donor DU identifier (an identifier of the first IAB node/the first IAB donor DU, which is used to indicate that content in the following BAP routing ID list is a routing mapping table required by which node)
>>BAP routing ID list (an adaptation layer routing identifier list, which may include one or more items, where each item includes one BAP routing ID and one next-hop node (Next hop Node))
>>>BAP routing ID (the adaptation layer routing identifier)
>>>Next hop Node (the next-hop node)

The RAN management network element may provide the routing mapping table for the first IAB donor (or the first IAB donor CU, or the first IAB donor CU-CP) based on the signaling structure of the routing mapping table determined by the RAN management network element. Therefore, the routing mapping table may include routing mapping tables required by a plurality of different IAB nodes and/or IAB donor DUs. A routing mapping table required by the first IAB node and/or the first IAB donor DU is included. When the routing mapping table determined by the RAN management network element in step 901 is only the routing mapping table of the first IAB node or the first IAB donor DU, content in a first row in the foregoing signaling structure corresponding to the routing mapping table may be optional (optional), that is, may not include an IAB node/IAB donor DU identifier part.

The cell information may include an identifier of a cell and a resource configuration of the cell. The cell information of the first IAB donor may include an identifier of a cell serving the first IAB donor and a resource configuration of the cell. The cell information of the first IAB node may include an identifier of a cell serving the first IAB node and a resource configuration of the cell.

The identifier of the cell may be a physical cell identifier (physical cell identifier, PCI), an NR cell identifier (NR cell identifier, NCI), or other information that can uniquely identify the cell.

The resource configuration of the cell may include one or more of the following: frequency information of the cell, bandwidth information of the cell, uplink and downlink duplex mode of the cell, a transmission resource configuration of the cell, synchronization signal and physical broadcast channel block (synchronization signal and physical broadcast channel block, SSB) transmission configuration (SSB transmission configuration, STC) configuration of the cell, a common random access resource configuration of the cell, an IAB-dedicated random access resource configuration of the cell, channel state information reference signal (channel state information reference signal, CSI-RS) configuration of the cell, scheduling request (scheduling request, SR) configuration of the cell, sending a location of a physical downlink control channel (physical downlink control channel, PDCCH) that is configured in a system information block (system information block, SIB) 1, and a common subcarrier spacing configuration.

The uplink and downlink duplex mode may be a TDD mode, or may be a frequency division duplexing (frequency division duplexing, FDD) mode.

The transmission resource configuration of the cell may include attribute configuration of a downlink (downlink) symbol (symbol)/an uplink (uplink) symbol/a flexible (flexible) symbol in each slot (slot). The attribute may be hard (hard), soft (soft), or not available (not available). When the uplink and downlink duplex mode of the cell is a TDD mode, the transmission resource configuration of the cell may further include locations and quantities of the downlink symbol, the uplink symbol, and the flexible symbols in each slot.

The RAN management network element may perform address management on the IAB donor and the IAB node in a management range of the RAN management network element. This may be understood as that the RAN management network element may determine a BAP layer identifier and/or an IP address for the IAB node and/or the IAB donor in the management range. It can be learned that the RAN management network element may manage an address of the first IAB donor and/or the first IAB node. In other words, the RAN management network element may determine the BAP layer identifier and/or the IP address for the first IAB donor and/or the first IAB node. Specific IAB nodes and/or IAB donors in the management range to which the BAP layer identifier and/or the IP address is allocated may be determined based on a requirement of the IAB node and/or the IAB donor, or may be determined according to a request of the IAB donor.

In a case, in a process of establishing the first interface between the RAN management network element and the first IAB donor or after establishing the first interface, the RAN management network element may determine a BAP layer identifier list. The BAP layer identifier list may be shown in any one of Table 1 to Table 4.

**Table 1 BAP layer identifier list**

| BAP layer identifier |
|---|
| BAP layer identifier 1 |
| BAP layer identifier 2 |
| ··· |
| BAP layer identifier N |

**Table 2 BAP layer identifier list**

| Identifier of an IAB donor/IAB node | BAP layer identifier |
|---|---|
| IAB donor 1 | BAP layer identifier 1 |
| IAB node 1 | BAP layer identifier 2 |
| ··· | ··· |
| IAB node N-1 | BAP layer identifier N |

**Table 3 BAP layer identifier list**

| BAP layer identifier | Identifier of an IAB donor/IAB node |
|---|---|
| BAP layer identifier 1 | IAB donor 1 |
| BAP layer identifier 2 | IAB donor 1 |
| BAP layer identifier 3 | IAB node 1 |
| BAP layer identifier 4 | IAB node 1 |
| ··· | ··· |
| BAP layer identifier N | IAB node M |

**Table 4 BAP layer identifier list**

| Identifier of an IAB donor/IAB node | BAP layer identifier |
|---|---|
| IAB donor identifier 1 | BAP layer identifier 1, BAP layer identifier 2 |
| IAB node 1 | BAP layer identifier 3, BAP layer identifier 4 |
| ··· | ··· |
| IAB node M | BAP layer identifier N |

As shown in Table 1, the RAN management network element may determine a BAP layer identifier used by the first IAB donor and an IAB node managed by the first IAB donor, but may not determine which BAP layer identifier is used by which IAB node or the first IAB donor. The first IAB donor may determine which BAP layer identifier is used by which IAB node or first IAB donor. As shown in Table 2, the RAN management network element may determine a BAP layer identifier for the first IAB donor and each IAB node in the IAB nodes managed by the first IAB donor. As shown in Table 3 or Table 4, the RAN management network element may determine a BAP layer identifier for the first IAB donor or an IAB node managed by the first IAB donor, or may determine a plurality of BAP layer identifiers.

When the CU and the DU of the IAB donor are separated, as shown in Table 1, the RAN management network element may determine BAP layer identifiers used by the first IAB donor DU and an IAB node managed by the first IAB donor CU, but may not determine which BAP layer identifier is used by which IAB node or which DU of the first IAB donor. The CU or CU-CP of the first IAB donor may determine which BAP layer identifier is used by which IAB node or which DU of the first IAB donor. As shown in Table 2, the RAN management network element may determine a BAP layer identifier for the DU of the first IAB donor and each IAB node in the IAB nodes managed by the first IAB donor. As shown in Table 3 or Table 4, the RAN management network element may determine a BAP layer identifier for the first IAB donor DU or an IAB node managed by the first IAB donor, or may determine a plurality of BAP layer identifiers.

It should be understood that Table 1 to Table 4 are merely examples for describing the BAP layer identifier list, and do not constitute a limitation on the BAP layer identifier list. For example, the BAP layer identifier list may include only BAP layer identifiers used by all IAB nodes or some IAB nodes managed by the first IAB donor.

Similarly, after the first interface is established between the RAN management network element and the first IAB donor, the RAN management network element may determine an IP address list. The IP address list may include the IP address of the first IAB node, that is, may include the IP address allocated to the first IAB node. Each IP address may be specifically an IPv4 address, an IPv6 address, or an IPv6 address prefix. The IP address list may be shown in any one of Table 5 to Table 8.

**Table 5 IP address list**

| IP address |
|---|
| IP address 1 |
| IP address 2 |
| ··· |
| IP address N |

**Table 6 IP address list**

| Identifier of an IAB node | IP address |
|---|---|
| IAB node 1 | IP address 1 |
| IAB node 2 | IP address 2 |
| ··· | ··· |
| IAB node N | IP address N |

**Table 7 IP address list**

| IP address | Identifier of an IAB node |
|---|---|
| IP address 1 | IAB node 1 |
| IP address 2 | IAB node 1 |
| IP address 3 | IAB node 2 |
| IP address 4 | IAB node 2 |
| ··· | ··· |
| IP address N | IAB node M |

**Table 8 IP address list**

| Identifier of an IAB node | IP address |
|---|---|
| IAB node 1 | IP address 1, IP address 2 |
| IAB node 2 | IP address 3, IP address 4 |
| ··· | ··· |
| IAB node M | IP address N |

As shown in Table 5, the RAN management network element may determine an IP address used by an IAB node managed by the first IAB donor, but may not determine which IP address is used by which IAB node. The first IAB donor may determine which IP address is used by which IAB node. As shown in Table 6, the RAN management network element may determine an IP address for each IAB node in the IAB nodes managed by the first IAB donor. As shown in Table 7 or Table 8, the RAN management network element may determine one IP address or may determine a plurality of IP addresses for the IAB node managed by the first IAB donor.

It should be understood that Table 5 to Table 8 are merely examples for describing the IP address list, and do not constitute a limitation on the IP address list. For example, the IP address list may include only IP addresses used by all IAB nodes or some IAB nodes managed by the first IAB donor.

In addition, the IP address list may further include usage of an IP address. For example, the IP address list may further include usage of each IP address. The usage may be an F1 interface user plane (F1-U) service, an F1 interface control plane (F1-C) service, or a non-F1 interface (non-F1) service. If the usage of the IP address is not included, it may be considered that the IP address may be used for all types of services.

M is an integer greater than or equal to 1, and N is an integer greater than or equal to M.

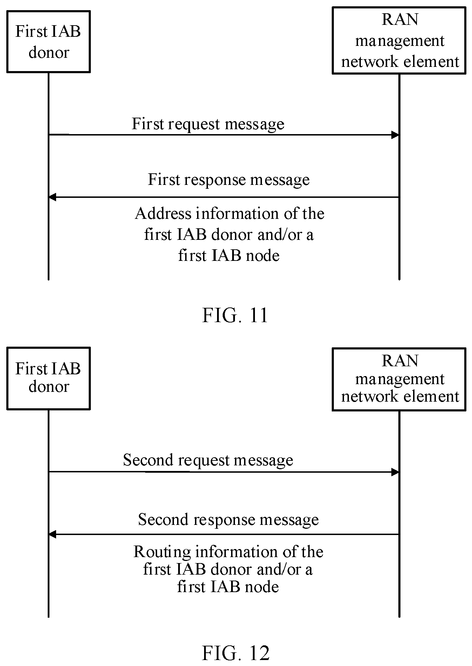

In another case, the RAN management network element may provide the address information for the first IAB donor based on the request message of the first IAB donor. Refer to FIG. 11. FIG. 11 is a schematic diagram of obtaining address information by an IAB donor according to an embodiment of the present invention. As shown in FIG. 11, when the first IAB donor and/or the first IAB node needs the address information, the first IAB donor may send, to the RAN management network element through the first interface, a first request message used to request the address information. The first request message may request the BAP layer identifier and/or the IP address. After receiving the first request message from the first IAB donor, the RAN management network element may send a first response message to the first IAB donor through the first interface in response to the first request message. The first response message carries the determined address information of the first IAB donor and/or the first IAB node. The address information of the first IAB donor and/or the first IAB node may be determined before the RAN management network element receives the first request message, or may be determined after the RAN management network element receives the first request message. When the address information of the first IAB donor and/or the first IAB node is determined after the first request message is received, the RAN management network element may first determine the address information of the first IAB donor and/or the first IAB node in response to the first request message, and then send the first response message to the first IAB donor through the first interface.

The first request message may carry one or more of the following information: a quantity of required BAP layer identifiers, an identifier of an IAB node that requires a BAP layer identifier, an identifier of the first IAB donor, a type of a required IP address, a quantity of required IP addresses, usage of the required IP address, and an identifier of an IAB node that requires an IP address. When the DU and the CU of the first IAB donor are separated, the identifier of the first IAB donor in the first request message may be replaced with an identifier of the first IAB donor DU of the required BAP layer identifier. It can be learned that the first request message may carry only the quantity of the required BAP layer identifiers, may not carry a quantity of BAP layer identifiers required by each IAB node, or may not carry a quantity of BAP layer identifiers required by the first IAB donor (or the first IAB donor DU). The first request message may carry only the quantity of the required IP addresses, and may not carry a quantity of IP addresses required by each IAB node. The RAN management network element may send all BAP layer identifiers and/or all IP addresses to the first IAB donor, and the first IAB donor allocates all the BAP layer identifiers and/or all the IP addresses.

When the first request message includes the type of the required IP address, the type of the required IP address may be one or more of an IPv4 address, an IPv6 address, or an IPv6 address prefix. Corresponding to each type of different IP addresses, the first request message may further include a quantity required for each type of IP address (that is, the quantity of the required IP addresses), or a quantity required for a type of each IP address corresponding to usages of different IP addresses. For example, the first request message may carry a quantity of IPv4 addresses/IPv6 addresses/IPv6 address prefixes that are requested for F1-C/F1-U/non-F1 service transmission. When the first request message carries one or more of the type of the required IP address, the quantity of the required IP addresses, and the usage of the required IP address, the first request message may further carry an identifier of an IAB node that specifically requires an IP address (that is, an identifier of an IAB node that requires an IP address). For example, the first request message may carry an identifier of the first IAB node and a quantity of IPv4 addresses/IPv6 addresses/IPv6 address prefixes that are required by the first IAB node and that are used for the F1-C/F1-U/non-F1 service transmission. When the first request message does not carry the usage of the required IP address, it may be considered that the requested IP address is applicable to all service types.

The first request message may also include one or more of a quantity of addresses required by the first IAB donor, a quantity of addresses required by the first IAB node, the identifier of the first IAB donor, or the identifier of the first IAB node. The address required by the first IAB donor may be understood as the BAP layer identifier required by the first IAB donor. When the first IAB donor is in a CU-DU separated architecture, the address required by the first IAB donor may be understood as the BAP layer identifier required by the first IAB donor DU. The address required by the first IAB node may be understood as the BAP layer identifier and/or the IP address required by the first IAB node. It can be learned that the first request message may carry a quantity of BAP layer identifiers required by each IAB node that needs a BAP layer identifier. In addition, the first request message may further carry a quantity of BAP layer identifiers required by the first IAB donor. When the first IAB donor is in a CU-DU split architecture, the first request message may carry identifiers of one or more first IAB donor DUs. Optionally, the first request message may further carry a quantity of BAP layer identifiers required by each first IAB donor DU. The first request message may further carry information such as a quantity, a type, and usage of the IP address required by each IAB node that needs an IP address. For details, refer to descriptions in the foregoing paragraph. In this way, the RAN management network element may directly determine allocated addresses for the first IAB node and the first IAB donor, and the first IAB donor does not need to perform allocation, so that a processing process of the first IAB donor can be reduced, and power consumption of the first IAB donor can be reduced.

When the first IAB donor and/or the first IAB node each needs only one BAP layer identifier, the first request message may not carry or include the quantity of the required BAP layer identifiers, or may not include the quantity of the BAP layer identifiers required by the first IAB donor and/or the first IAB node. When the first IAB node needs only one IP address, that is, each IAB node managed by the first IAB donor needs one IP address, the first request message may not carry the quantity of the required IP addresses, or may not include the quantity of the IP addresses required by the first IAB node. When the first IAB donor and/or the first IAB node each needs one BAP layer identifier, and the first IAB node needs only one IP address, the first request message may not carry the quantity of the required BAP layer identifiers and the quantity of the required IP addresses, or may not include the quantity of the BAP layer identifiers required by the first IAB donor, and/or the BAP layer identifier and/or the IP address required by the first IAB node. In this case, when the first request message carries the identifier of the first IAB donor, the RAN management network element may determine a BAP layer identifier for the first IAB donor. When the first request message carries the identifier of the first IAB node, a BAP layer identifier and/or an IP address may be determined for the first IAB node.

In still another case, after an IAB node accesses a network, the first IAB donor may send the first request message to the RAN management network element. In this case, the first request message may carry information such as an identifier of the IAB node, a quantity of BAP layer identifiers required by the IAB node, a type of an IP address required by the IAB node, usages of IP addresses required by the IAB node, and a quantity of an IP address corresponding to each usage. When only one BAP layer identifier is required, the first request message may not carry a quantity of BAP layer identifiers required by the IAB node. When only one IP address is required, the first request message may not carry a quantity of IP addresses required by the IAB node. When the first request message carries the quantity of the IP addresses required by the IAB node, the first request message may further carry the usage of the IP address.

It can be learned that when each IAB node that needs an IP address needs only one IP address, the first request message may not carry the quantity of the required IP addresses or a quantity of IP addresses required by each IAB node, and the RAN management network element may allocate, by default, one IP address to each IAB node that needs an IP address. When the IAB node and/or the first IAB donor that needs the BAP layer identifier each need only one BAP layer identifier, the first request message may not carry the quantity of the required BAP layer identifiers, or the quantity of the IP addresses required by each IAB node and/or the first IAB donor. The RAN management network element may allocate, by default, one BAP layer identifier to each IAB node and/or first IAB donor that needs the BAP layer identifier.

The RAN management network element may perform routing management on the IAB donor and the IAB node in the management range of the RAN management network element. The RAN management network element may determine routing information for the IAB node and/or the IAB donor in the management range. It can be learned that the RAN management network element may manage routing of the first IAB donor and/or the first IAB node. The RAN management network element may determine the routing information for the first IAB donor and/or the first IAB node. The RAN management network element may notify the first IAB donor of a node identifier and a sequence included in a transmission path corresponding to each adaptation layer routing identifier (BAP routing ID).

The RAN management network element needs to determine the adaptation layer routing identifier of the first IAB donor and/or the first IAB node. When the first IAB donor and/or the first IAB node needs the routing mapping table, the RAN management network element may determine the routing mapping table for the first IAB donor and/or the first IAB node based on the adaptation layer routing identifier.

To enable the RAN management network element to obtain a network topology of the first IAB donor, the first IAB donor may actively send (that is, report) the topology information to the RAN management network element. When the first IAB donor is in a CU-DU separated architecture, the first IAB donor CU or the first IAB donor CP-UP may actively report the topology information to the RAN management network element. The topology information may include a connection relationship between the first IAB donor (or the first IAB donor DU) and/or the first IAB node and another node. In addition, the topology information may further include the identifier of the first IAB donor (or the first IAB donor DU) and/or the identifier of the first IAB node. When a network topology of the first IAB donor (or the first IAB donor DU) and/or the first IAB node changes, the first IAB donor may send updated topology information to the RAN management network element. For example, when a new IAB node is newly connected to the first IAB donor, or an old IAB node leaves the management range of the first IAB donor and is disconnected from the first IAB donor, or an IAB node establishes dual connectivity, or an IAB node encounters a radio link failure (radio link failure, RLF) on the wireless backhaul link, it may be considered that the network topology of the first IAB donor and/or the first IAB node changes. The another node may be a terminal device, or may be an IAB node, or may be an IAB donor. The another node may include a node in the management range of the first IAB donor, and may further include a node in a management range of another IAB donor. The node in the management range of the another IAB donor may include one or more of another IAB donor (or another IAB donor DU), an IAB node managed by the another IAB donor, a terminal device connected to a cell managed by the another IAB donor, and the like. The connection relationship between the first IAB node and the another node may include identifiers of one or more parent nodes connected to the first IAB node, and may further include identifiers of one or more child nodes connected to the first IAB node. In addition, the connection relationship between the first IAB node and the another node may further include identifiers of one or more terminal devices connected to the first IAB node, and identifiers of IAB donors (or IAB donor DUs) connected to the first IAB node through one or more wireless backhaul links.

Refer to FIG. 12. FIG. 12 is a schematic diagram of obtaining routing information by an IAB donor according to an embodiment of the present invention. As shown in FIG. 12, when the first IAB donor (or the first IAB donor DU) and/or the first IAB node needs the routing information, the first IAB donor (or the first IAB donor CU, or the first IAB donor CU-CP) may send a second request message to the RAN management network element. The second request message is used to request the routing information. After receiving the second request message from the first IAB donor, the RAN management network element may send a second response message to the first IAB donor through the first interface. The second response message carries the routing information of the first IAB donor (or the first IAB donor DU) and/or the first IAB node. The routing information of the first IAB donor and/or the first IAB node may be determined before the RAN management network element receives the second request message, or may be determined after the RAN management network element receives the second request message. When the routing information of the first IAB donor and/or the first IAB node is determined after the RAN management network element receives the second request message, the RAN management network element may first determine the routing information of the first IAB donor and/or the first IAB node in response to the second request message, and then send the second response message to the first IAB donor through the first interface. For example, after the network topology is updated, some newly added IAB nodes and other related nodes may need routing information. The second request message may carry identifiers of nodes that need the routing information, and may further carry topology information of these nodes. The other related nodes may be a terminal device that has an available transmission path to the newly added IAB node, another IAB node, or a first IAB donor.

The RAN management network element may perform cell management on the IAB donor and the IAB node in the management range of the RAN management network element. This may be understood that the RAN management network element may determine, for a cell served by the IAB node and/or the IAB donor in the management range, an identifier of the cell and configuration information of the cell. It can be learned that the RAN management network element may manage a cell served by the first IAB donor and/or the first IAB node. In other words, the RAN management network element may determine, for a cell serving the first IAB donor and/or first IAB node, the identifier of the cell and the configuration information of the cell.

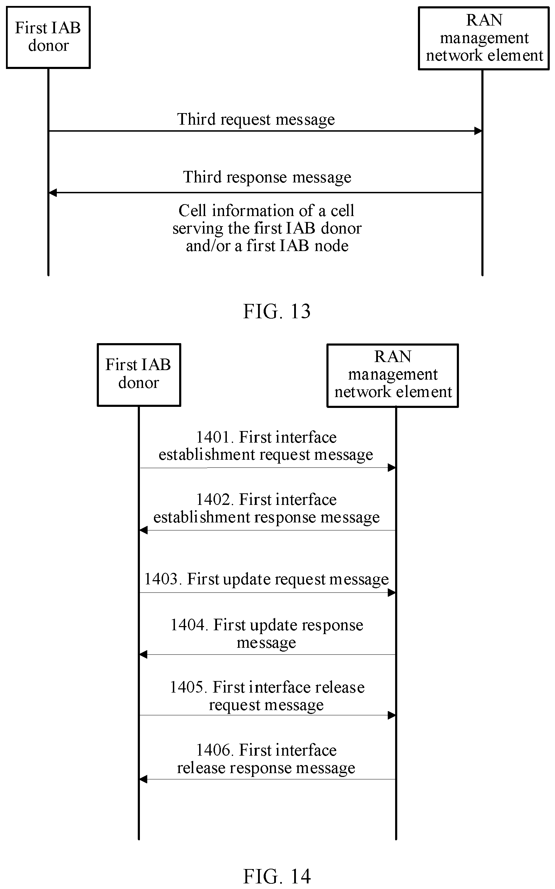

Refer to FIG. 13. FIG. 13 is a schematic diagram of obtaining cell information by an IAB donor according to an embodiment of the present invention. As shown in FIG. 13, when the first IAB donor and/or the first IAB node needs the cell information, the first IAB donor may send a third request message to the RAN management network element. The third request message is used to request cell information for the cell serving the first IAB donor and/or the first IAB node. After receiving the third request message from the first IAB donor, the RAN management network element may send a third response message to the first IAB donor through the first interface. The third response message carries the cell information of the cell serving the first IAB donor and/or the first IAB node. The cell information may be determined after the RAN management network element receives the third request message, or may be determined before the RAN management network element receives the third request message. When the cell information is determined after the RAN management network element receives the third request message, the RAN management network element may first determine, in response to the third request message, the cell information of the cell serving the first IAB donor and/or the first IAB node, and then send the third response message to the first IAB donor through the first interface.

The third request message may carry the identifier of the first IAB donor (or the first IAB donor DU) and/or of the first IAB node. The third request message may further carry the identifier of the cell serving the first IAB donor and/or the first IAB node. For example, when the first IAB donor and/or the first IAB node obtains initial cell information, but cell information of some cells needs to be updated subsequently, the first IAB donor may further include, to the third request message, an identifier of a cell whose resource configuration of the cell needs to be updated. Updating the cell information may be understood as updating or reconfiguring the resource configuration of the cell, or may be understood as updating or reconfiguring the identifier of the cell and the resource configuration of the cell.

It should be understood that the first request message, the second request message, and the third request message may be combined into one request message. In other words, one request message may simultaneously request the address information, the routing information, and the cell information. The foregoing first request message, the second request message, and the third request message may alternatively be combined into two request messages. For example, one request message may request both the address information and the routing information, and another request message may request the cell information. For another example, one request message may request both the address information and the cell information, and another request message may request the routing information. For another example, one request message may request both the routing information and the cell information, and another request message may request the address information.

It should be understood that when the CU and the DU of the first IAB donor are separated, the configuration information of the first IAB donor may be the configuration information of the first IAB donor DU.

902. The RAN management network element sends the configuration information of the first IAB donor and/or the first IAB node to the first IAB donor.

Correspondingly, the first IAB donor (or the first IAB donor CU, or the first IAB donor CU-CP) receives the configuration information of the first IAB donor and/or the first IAB node from the RAN management network element, that is, receives the configuration information of the first IAB donor and/or the first IAB node from the RAN management network element through the first interface.

After determining the configuration information of the first IAB donor and/or the first IAB node, the RAN management network element may send the configuration information of the first IAB donor and/or the first IAB node to the first IAB donor through the first interface.

The first IAB donor may also send the request message to the RAN management network element. The request message is used to request the configuration information. After receiving the request message, the RAN management network element may send the configuration information to the first IAB donor through the first interface in response to the request message. The request message may include the quantity of the addresses required by the first IAB node and/or the first IAB donor, and the identifier of the first IAB node and/or the first IAB donor. The request message may include topology information. The topology information may include a connection relationship between the first IAB donor and/or the first IAB node and another node. The request message may include the identifier of the cell serving the first IAB donor and/or the first IAB node. The request message may include one or more of the quantity of the addresses required by the first IAB node and/or the first IAB donor, the identifier of the first IAB node and/or the first IAB donor, the topology information, and the identifier of the cell serving the first IAB donor and/or the first IAB node. For detailed descriptions, refer to related descriptions in step 901.

903. The first IAB donor obtains one or more of the address information, the routing information, and the cell information.

After receiving the configuration information of the first IAB donor and/or the first IAB node from the RAN management network element, the first IAB donor may obtain one or more of the address information, the routing information, and the cell information of the first IAB donor and/or the first IAB node from the configuration information of the first IAB donor and/or the first IAB node, for subsequent data or signaling transmission. The data or the signaling may include uplink data or uplink signaling, that is, data or signaling sent by the terminal device to the first IAB donor, or signaling sent by the IAB node to the first IAB donor. The data or the signaling may alternatively be downlink data or downlink signaling, that is, data sent by the first IAB donor to the terminal device, or signaling sent by the first IAB donor to the IAB node.

After receiving the configuration information of the first IAB node from the RAN management network element, the first IAB donor may send the configuration information of the first IAB node to the first IAB node. After receiving the configuration information of the first IAB node from the first IAB donor, the first IAB node may obtain one or more of the address information, the routing information, and the cell information of the first IAB node from the configuration information of the first IAB node, for subsequent data or signaling transmission.

After receiving the configuration information of the first IAB donor (or the first IAB donor DU) and/or the first IAB node from the RAN management network element, the first IAB donor (or the first IAB donor CU, or the first IAB donor CU-CP) may obtain configuration information (specifically including one or more of address information, routing information, and cell information) of an IAB donor DU and/or an IAB node in the management range of the first IAB donor. Subsequently, the first IAB donor may send the configuration information of the first IAB node to the first IAB node. In addition, when the first IAB donor is in the CU-DU separated architecture, subsequently, the first IAB donor CU (or the first IAB donor CU-CP) may further send configuration information of the first IAB donor DU to the first IAB donor DU.

When the RAN management network element has determined the configuration information of the first IAB node, the first IAB donor may forward the configuration information of the first IAB node to the first IAB node. When the RAN management network element does not determine the configuration information of the first IAB node, the first IAB donor first needs to determine the configuration information of the first IAB node, and then may send the configuration information of the first IAB node to the first IAB node. It can be learned that when the RAN management network element has determined the configuration information of the first IAB node and/or the first IAB donor, the first IAB donor does not need to determine the configuration information of the first IAB node and/or the first IAB donor. When the RAN management network element does not determine the configuration information of the first IAB node and/or the first IAB donor, the first IAB donor needs to determine the configuration information of the first IAB node and/or the first IAB donor. For example, when the address information includes the BAP layer identifier list in Table 1 and/or the IP address list shown in Table 5, the first IAB donor first needs to determine the BAP layer identifier of the first IAB donor and/or the first IAB node, and/or the IP address of the first IAB node.

Based on the foregoing network architectures, refer to FIG. 14. FIG. 14 is a schematic flowchart of another communication method according to an embodiment of the present invention. As shown in FIG. 14, the communication method may include the following steps.

1401. A first IAB donor sends a first interface establishment request message to a RAN management network element.

Correspondingly, the RAN management network element receives the first interface establishment request message from the first IAB donor.

When the first IAB donor needs to provide a service for an IAB node managed by the first IAB donor, to ensure normal data transmission, the first IAB donor may first send the first interface establishment request message to the RAN management network element. The first interface establishment request message is used to request to establish a first interface. The first interface establishment request message may be a first interface setup request message, or may be another message. A name of the first interface establishment request message is not limited.

The first interface establishment request message may carry an identifier of the first IAB donor. The identifier of the first IAB donor may be an identifier of a first IAB donor CU, or may be an identifier of a first IAB donor CU-CP, or may be a gNodeB identifier (gNB ID) corresponding to the first IAB donor, or may be an identifier of the first IAB donor DU, or may be other information that can be used to uniquely identify the first IAB donor. The identifier of the first IAB donor CU may be a name of the CU, or may be a CU ID configured by the OAM device for the first IAB donor CU, or may be an IP address of the first IAB donor CU, or may be other information that can uniquely identify the first IAB donor CU. The first interface establishment request message may further carry topology information. The topology information may include identifiers of nodes managed by the first IAB donor and a connection relationship between the nodes. The node managed by the first IAB donor may include an IAB node managed by the first IAB donor. When the CU and the DU of the first IAB donor are separated, the node managed by the first IAB donor may further include one or more donor DUs of the first IAB donor. The node managed by the first IAB donor may further include a terminal device. The connection relationship between the nodes may include a connection relationship between IAB nodes, may further include a connection relationship between an IAB node and a terminal device, and may further include a connection relationship between an IAB node and an IAB donor (or an IAB donor DU). The connection relationship may be a parent-child relationship.

1402. The RAN management network element sends a first interface establishment response message to the first IAB donor.

Correspondingly, the first IAB donor receives the first interface establishment response message from the RAN management network element.

After receiving the first interface establishment request message from the first IAB donor, the RAN management network element may send the first interface establishment response message to the first IAB donor. After the first IAB donor receives the first interface establishment response message from the RAN management network element, it indicates that establishment of the first interface between the first IAB donor and the RAN management network element is completed. The first IAB donor may communicate with the RAN management network element through the first interface. The first interface establishment response message may be a first interface setup response message, or may be an interface setup response message, or may be another message. A name of the first interface establishment response message is not limited. The first interface may be an Ex interface, or may be another interface. A name of the first interface is not limited.

The first interface establishment response message may carry configuration information. The configuration information may be configuration information of the first IAB donor and/or a first IAB node. For detailed descriptions, refer to descriptions in step 901. The request message in step 902 may be a first interface establishment request message.

1403. The first IAB donor sends a first update request message to the RAN management network element through the first interface.

Correspondingly, the RAN management network element receives the first update request message from the first IAB donor (or the first IAB donor CU or the first IAB donor CU-CP).

When a network topology of a node managed by the first IAB donor changes, or service traffic in a network changes, if a network topology relationship between the first IAB node and/or the first IAB donor needs to be adjusted, the first IAB donor may send the first update request message to the RAN management network element through the first interface, that is, initiate an IAB configuration update procedure to the RAN management network element. The first update request message is used to obtain updated configuration information of the first IAB node and/or the first IAB donor. The first update request message may be an IAB configuration update request message (that is, an IAB CONFIGURATIONUPDATE REQUEST message), or may be another message. A name of the first update request message is not limited.

The first update request message may carry updated topology information of the node managed by the first IAB donor. The updated topology information may include an identifier of a newly added IAB node and a connection relationship between the newly added IAB node and an existing IAB node. The updated topology information may alternatively include an identifier of a leaved IAB node (including a switched IAB node, a sleeping IAB node, or the like). The updated topology information may further include update information of a connection relationship between existing IAB nodes and identifiers of these IAB nodes. For example, the updated topology information may include an identifier of an IAB node whose connection relationship is updated and an updated connection relationship of these IAB nodes.

1404. The RAN management network element sends a first update response message to the first IAB donor.

Correspondingly, the first IAB donor (or the first IAB donor CU or the first IAB donor CU-CP) receives the first update response message from the RAN management network element.

After receiving the update request message from the first IAB donor, the RAN management network element may send the first update response message to the first IAB donor. The first update response message may be an IAB configuration update response message (that is, an IAB CONFIGURATIONUPDATE ACKNOWLEDGE/RESPONSE message), or may be another message. A name of the first update response message is not limited.

The first update response message may carry the configuration information of the first IAB donor and/or the first IAB node. The request message in step 902 may be a first update request message.

1405. The first IAB donor sends a first interface release request message to the RAN management network element.

Correspondingly, the RAN management network element receives the first interface release request message from the first IAB donor.

When the first IAB donor needs to release the first interface due to some reasons, the first IAB donor may send the first interface release request message to the RAN management network element. For example, a reason may be that no IAB node is connected to the first IAB donor in a management range of the first IAB donor, or may be that all IAB nodes connected to the first IAB donor are in an idle (idle) state or an inactive (inactive) state. The first interface release request message may carry the identifier of the first IAB donor, and is used to request to release the first interface between the first IAB donor and the RAN management network element, that is, used to request to remove the first interface between the first IAB donor and the RAN management network element. The first interface release request message may be sent after the first IAB donor has no IAB node in an active state, or may be sent in another case. This is not limited herein.

The first interface release request message may be a first interface release request message, or may be another message. A name of the first interface release request message is not limited.

1406. The RAN management network element sends a first interface release response message to the first IAB donor.

Correspondingly, the first IAB donor receives the first interface release response message from the RAN management network element.

After receiving the first interface release request message from the first IAB donor, the RAN management network element may release the first interface between the first IAB donor and the RAN management network element, and then may send the first interface release response message to the first IAB donor.

That the RAN management network element releases the first interface between the first IAB donor and the RAN management network element may be understood as that the RAN management network element may remove various configuration information on the first interface, and erase various context information related to all the IAB nodes (and terminal devices) connected to the first IAB donor.

It should be understood that a release procedure of the first interface may alternatively be initiated by the RAN management network element. In this case, step 1405 may be replaced with the following: The RAN management network element sends a first interface release request message to the first IAB donor. Step 1406 may be replaced with the following: The first IAB donor sends a first interface release response message to the RAN management network element.

After receiving the first interface release request message, the RAN management network element or the first IAB donor may fail to release the first interface because a related service still exists, or information carried in the release request message is incorrect or parsing cannot be correctly performed. In this case, a first interface release failure message is returned. The first interface release failure message may be an Ex RELEASE/REMOVAL FAILURE message, or may be another message. A name of the first interface release failure message is not limited. The first interface release failure message may carry a cause value (Cause value), which is used to indicate a cause of a release failure.

It should be understood that not all steps in step 1401 to step 1406 need to be performed. For example, step 1403 and step 1404 may be performed, or may not be performed. For another example, step 1405 and step 1406 may be performed, or may not be performed.

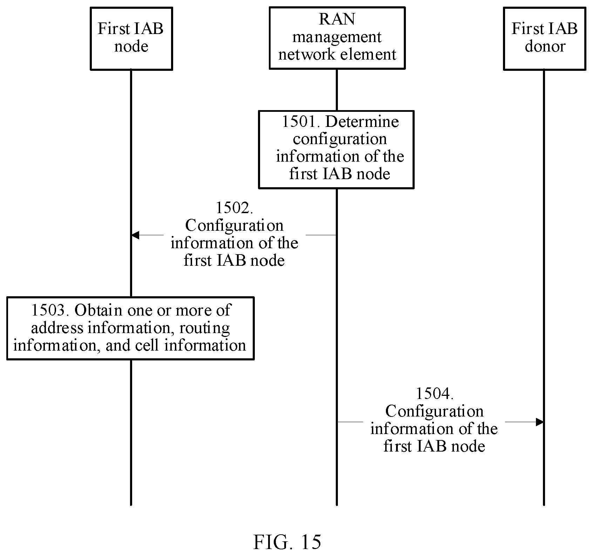

Based on the foregoing network architectures, refer to FIG. 15. FIG. 15 is a schematic flowchart of still another communication method according to an embodiment of the present invention. As shown in FIG. 15, the communication method may include the following steps.

A first interface is established between a RAN management network element and a first IAB donor. The RAN management network element may communicate with a first IAB donor (or a first donor CU or a first donor CU-CP) through the first interface. A second interface is established between the RAN management network element and a first IAB node. The RAN management network element may communicate with the first IAB node through the second interface. The first IAB donor may be connected to the first IAB node through a wireless backhaul link. For detailed descriptions, refer to content in paragraphs preceding step 901.

1501. The RAN management network element determines configuration information of the first IAB node.

When the first IAB node needs the configuration information, the RAN management network element may determine the configuration information of the first IAB node. The configuration information of the first IAB node may include one or more of address information, routing information, and cell information of the first IAB node. The address information of the first IAB node may include a BAP layer identifier and/or an IP address of the first IAB node. The routing information of the first IAB node may include an adaptation layer routing identifier and/or a routing mapping table of the first IAB node. The routing mapping table of the first IAB node includes the adaptation layer routing identifier of the first IAB node and an identifier of a next-hop node. When the first IAB node is an access IAB node, the routing information of the first IAB node may include the adaptation layer routing identifier, and may further include the routing mapping table. When the first IAB node is an access IAB node, and the routing information of the first IAB node does not include the routing mapping table, a default (default) route of the first IAB node may be determined as the routing mapping table of the first IAB node. When the first IAB node is the intermediate IAB node, the routing information of the first IAB node includes the routing mapping table of the first IAB node. The cell information of the first IAB node includes an identifier of a cell serving the first IAB node and a resource configuration of the cell. For detailed descriptions, refer to related descriptions in step 901.

1502. The RAN management network element sends the configuration information of the first IAB node to the first IAB node through the second interface.

Correspondingly, the first IAB node receives the configuration information of the first IAB node from the RAN management network element through the second interface.

After determining the configuration information of the first IAB node, the RAN management network element may send the configuration information of the first IAB node to the first IAB node through the second interface.

When the first IAB node needs the configuration information, the first IAB node may send a second request message to the RAN management network element through the second interface. The second request message is used to request the configuration information of the first IAB node. The RAN management network element receives the second request message from the first IAB node, and may send the configuration information to the first IAB node through the second interface in response to the second request message. The configuration information of the first IAB node may be determined before the RAN management network element receives the second request message, or may be determined in response to the second request message after the RAN management network element receives the second request message.

The second request message may include an identifier of the first IAB node. When the configuration information of the first IAB node is determined before the RAN management network element receives the second request message, after receiving the second request message, the RAN management network element may send the configuration information of the first IAB node to the first IAB node in response to the second request message. When the configuration information of the first IAB node is determined after the RAN management network element receives the second request message, the address information of the first IAB node may include one BAP layer identifier and/or one IP address. When the RAN management network element obtains, in another manner, a quantity of addresses required by the first IAB node, the RAN management network element may determine the address information of the first IAB node based on the quantity of the addresses required by the first IAB node.

The second request message may include the quantity of the addresses required by the first IAB node and the identifier of the first IAB node. After receiving the second request message, the RAN management network element may first determine, in response to the second request message, the address information of the first IAB node based on the quantity of the addresses required by the first IAB node, and then send the configuration information of the first IAB node to the first IAB node through the second interface.

The second request message may include second topology information. The second topology information may include a connection relationship between the first IAB node and a parent node and/or a child node of the first IAB node. In this application, the connection relationship between the first IAB node and the parent node and/or the child node of the first IAB node may include identifiers of one or more parent nodes connected to the first IAB node, and identifiers of one or more child nodes connected to the first IAB node. The connection relationship between the first IAB node and the parent node and/or the child node of the first IAB node may further include identifiers of one or more terminal devices connected to the first IAB node, identifiers of IAB donors (or IAB donor DUs) connected to the first IAB node through one or more wireless backhaul links, and the like. The second topology information may also include an identifier of a newly added IAB node and a connection relationship between the newly added IAB node and an existing IAB node.

The second request message may include the identifier of the cell serving the first IAB node.

The second request message may include any two or three of the identifier of the first IAB node (or the quantity of the addresses required by the first IAB node and the identifier of the first IAB node), the second topology information, and the identifier of the cell serving the first IAB node.

1503. The first IAB node obtains one or more of the address information, the routing information, and the cell information of the first IAB node.

After receiving the configuration information of the first IAB node from the RAN management network element through the second interface, the first IAB node may obtain one or more of the address information, the routing information, and the cell information of the first IAB node. For detailed descriptions, refer to related descriptions of the first IAB node in step 903.

1504. The RAN management network element sends the configuration information of the first IAB node to the first IAB donor through the first interface.

After determining the configuration information of the first IAB node, the RAN management network element may send the configuration information of the first IAB node to the first IAB donor through the first interface. After receiving the configuration information of the first IAB node from the RAN management network element, the first IAB donor may obtain one or more of the address information, the routing information, and the cell information of the first IAB node, and store one or more of the address information, the routing information, and the cell information of the first IAB node, for subsequent data or signaling transmission.

It can be learned that the first IAB node may directly communicate with the RAN management network element through the second interface, without through the first IAB donor. However, the RAN management network element may still send configuration information of all IAB nodes managed by the first IAB donor to the first IAB donor, to ensure normal data transmission.

When the CU and a DU of the first IAB donor are separated, the RAN management network element may send the configuration information of the first IAB node to the first IAB donor CU (or the first IAB donor CU-CP) through the first interface.

In addition, the RAN management network element may further determine configuration information of the first IAB donor, that is, configuration information configured for the first IAB donor, and then may send the configuration information of the first IAB donor to the first IAB donor through the first interface. The configuration information of the first IAB donor may include one or more of address information, routing information, and cell information of the first IAB donor. Correspondingly, the first IAB donor may receive the configuration information of the first IAB donor from the RAN management network element through the first interface, and then may obtain one or more of the address information, the routing information, and the cell information of the first IAB donor, and store one or more of the address information, the routing information, and the cell information of the first IAB donor, for subsequent data or signaling transmission. For detailed descriptions, refer to step 901.

Similarly, when the first IAB donor needs the configuration information, the first IAB donor may send a first request message to the RAN management network element through the first interface. The first request message is used to request the configuration information of the first IAB donor. The RAN management network element receives the first request message from the first IAB donor, and may send the configuration information of the first IAB donor to the first IAB donor through the first interface in response to the first request message. The configuration information of the first IAB donor may be determined before the RAN management network element receives the first request message, or may be determined in response to the first request message after the RAN management network element receives the first request message.

The first request message may include an identifier of the first IAB donor. The first request message may include a quantity of addresses required by the first IAB donor and the identifier of the first IAB donor. The first request message may include first topology information. The first topology information may include a connection relationship between the first IAB donor and an IAB node. The first request message may include an identifier of a cell serving the first IAB donor. The first request message may include any two or three of the identifier of the first IAB donor (or the quantity of the addresses required by the first IAB donor and the identifier of the first IAB donor), the first topology information, and the identifier of the cell serving the first IAB donor.

When the CU and the DU of the first IAB donor are separated, the RAN management network element determines configuration information of the first IAB donor DU. The RAN management network element may send the configuration information of the first IAB donor DU to the first IAB donor DU through a third interface. Correspondingly, the first IAB donor DU may receive the configuration information of the first IAB donor DU from the RAN management network element through the third interface, and then may obtain one or more of address information, routing information, and cell information of the first IAB donor DU, and store one or more of the address information, the routing information, and the cell information of the first IAB donor DU, for subsequent data or signaling transmission. In addition, the RAN management network element may further send the configuration information of the first IAB donor DU to the first IAB donor CU (or the first IAB donor CU-CP) through the first interface. Correspondingly, the first IAB donor CU (or the first IAB donor CU-CP) may receive the configuration information of the first IAB donor DU from the RAN management network element through the first interface, and then may obtain one or more of the address information, the routing information, and the cell information of the first IAB donor DU, and store one or more of the address information, the routing information, and the cell information of the first IAB donor DU, for subsequent data or signaling transmission.

When the first IAB donor DU needs the configuration information, the first IAB donor DU may send the first request message to the RAN management network element through the third interface. The first request message is used to request the configuration information of the first IAB donor DU. The RAN management network element receives the first request message from the first IAB donor DU, and may send the configuration information of the first IAB donor DU to the first IAB donor through the third interface in response to the first request message. The configuration information of the first IAB donor DU may be determined before the RAN management network element receives the first request message, or may be determined in response to the first request message after the RAN management network element receives the first request message.

The first request message may include one or more of an identifier of the first IAB donor DU (or a quantity of addresses required by the first IAB donor DU and the identifier of the first IAB donor DU), the first topology information, and an identifier of a cell serving the first IAB donor DU. The first topology information may include a connection relationship between the first IAB donor DU and an IAB node.

It should be understood that the first interface and the second interface are different interfaces. The first interface and the third interface are different interfaces. The second interface may be the same as or different from the third interface.

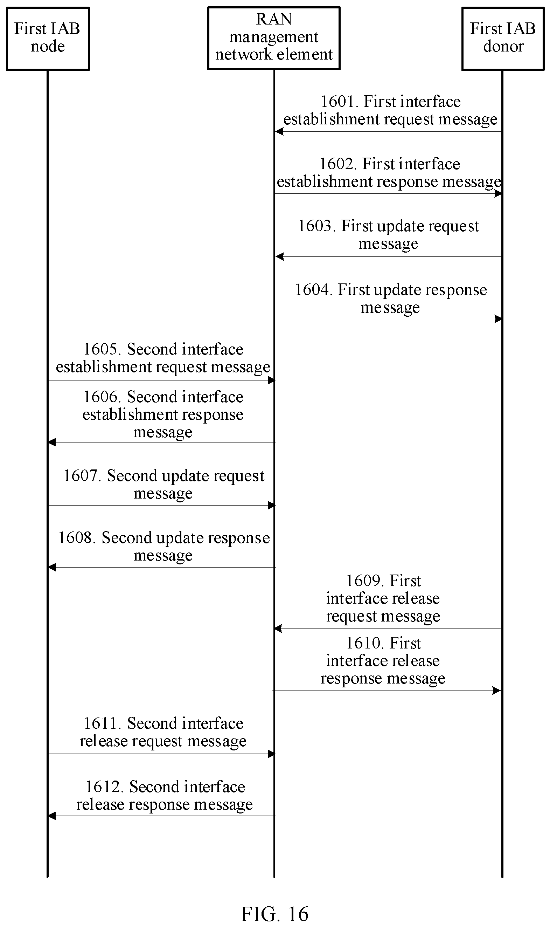

Based on the foregoing network architectures, refer to FIG. 16. FIG. 16 is a schematic flowchart of still another communication method according to an embodiment of the present invention. As shown in FIG. 16, the communication method may include the following steps.

A first IAB donor communicates with a RAN management network element through a first interface. A first IAB node communicates with the RAN management network element through a second interface. FIG. 16 is applicable to a scenario in which a DU and a CU of the first IAB donor are not separated.

1601. The first IAB donor sends a first interface establishment request message to the RAN management network element.

Correspondingly, the RAN management network element receives the first interface establishment request message from the first IAB donor.

When the first IAB donor needs to provide a service for an IAB node managed by the first IAB donor, to ensure normal data transmission, the first IAB donor may first send the first interface establishment request message to the RAN management network element. The first interface establishment request message is used to request to establish the first interface. The first interface establishment request message may carry one or more of an identifier of the first IAB donor, topology information, and an identifier of a cell serving the first IAB donor. For detailed descriptions of the topology information and the first interface establishment request message, refer to step 1401. The first request message in step 1504 may be a first interface establishment request message.

1602. The RAN management network element sends a first interface establishment response message to the first IAB donor.

For detailed descriptions of step 1602, refer to step 1402. A difference lies in that configuration information carried in the first interface establishment response message is configuration information of the first IAB donor.

1603. The first IAB donor sends a first update request message to the RAN management network element through the first interface.

When a node connected to the first IAB donor changes, if the configuration information of the first IAB donor needs to be adjusted, the first IAB donor may send the first update request message to the RAN management network element through the first interface. For other descriptions, refer to step 1403. The node connected to the first IAB donor changes, and a node connected to the first IAB donor may be added, or a node connected to the first IAB donor may be reduced. The first request message in step 1504 may be a first interface update request message.

1604. The RAN management network element sends a first update response message to the first IAB donor.

For detailed descriptions of step 1604, refer to step 1404. The difference lies in that configuration information carried in the first interface update response message is the configuration information of the first IAB donor.

1605. The first IAB node sends a second interface establishment request message to the RAN management network element.

Correspondingly, the RAN management network element receives the second interface establishment request message from the first IAB node.

When the first IAB node needs to communicate with the first IAB donor, the first IAB node may first send the second interface establishment request message to the RAN management network element. The second interface establishment request message is used to request to establish the second interface. The second interface establishment request message may be a second interface setup request message, or may be another message. A name of the second interface establishment request message is not limited.

The second interface establishment request message may carry one or more of an identifier of the first IAB node, topology information, and an identifier of a cell serving the first IAB node. The topology information may include an identifier of another node connected to the first IAB node. For details, refer to descriptions of the second topology information in step 1502 for understanding. The second request message in paragraphs following step 1502 may be a second interface establishment request message.

1606. The RAN management network element sends a second interface establishment response message to the first IAB node.

Correspondingly, the first IAB node receives the second interface establishment response message from the RAN management network element.

After receiving the second interface establishment request message from the first IAB node, the RAN management network element may send the second interface establishment response message to the first IAB node. After the first IAB node receives the second interface establishment response message from the RAN management network element, it indicates that establishment of the second interface between the first IAB node and the RAN management network element is completed. The first IAB node may communicate with the RAN management network element through the second interface. The second interface establishment response message may be a second interface setup response message, or may be another message. A name of the second interface establishment response message is not limited. The second interface may be an Ey interface, or may be another interface. A name of the second interface is not limited. The second interface establishment response message may carry configuration information of the first IAB node.

1607. The first IAB node sends a second update request message to the RAN management network element through the second interface.

Correspondingly, the RAN management network element receives the second update request message from the first IAB node.

When a network topology of a node connected to the first IAB node changes, if the configuration information of the first IAB node needs to be adjusted, the first IAB node may send the second update request message to the RAN management network element through the second interface, that is, initiate an IAB configuration update procedure to the RAN management network element. The second update request message is used to obtain updated configuration information of the first IAB node. The second update request message may be an IAB configuration update request message (that is, an IAB CONFIGURATIONUPDATE REQUEST message), or may be another message. A name of the second update request message is not limited.

The second update request message may carry updated topology information of the first IAB node. The updated topology information may include an identifier of the node connected to the first IAB node and a connection relationship. The second request message in paragraphs following step 1502 may be a second interface update request message.

1608. The RAN management network element sends a second update response message to the first IAB node.

Correspondingly, the first IAB node receives the second update response message from the RAN management network element.

After receiving the second update request message from the first IAB node, the RAN management network element may send the second update response message to the first IAB node. The second update response message may be an IAB configuration update response message (that is, an IAB CONFIGURATIONUPDATE ACKNOWLEDGE/RESPONSE message), or may be another message. A name of the second update response message is not limited.

The second update response message may carry the configuration information of the first IAB node.

1609. The first IAB donor sends a first interface release request message to the RAN management network element.

For detailed descriptions of step 1609, refer to step 1405.

1610. The RAN management network element sends a first interface release response message to the first IAB donor.

For detailed descriptions of step 1610, refer to step 1406.

1611. The first IAB node sends a second interface release request message to the RAN management network element.

Correspondingly, the RAN management network element receives the second interface release request message from the first IAB node.

When the first IAB node needs to release the second interface due to some reasons, the first IAB node may send the second interface release request message to the RAN management network element. The second interface release request message may carry the identifier of the first IAB node, and is used to request to release the second interface between the first IAB node and the RAN management network element, that is, used to request to remove the second interface between the first IAB node and the RAN management network element. The second interface release request message may be a second interface release request message, or may be another message. A name of the second interface release request message is not limited.

1612. The RAN management network element sends a second interface release response message to the first IAB node.

Correspondingly, the first IAB node receives the second interface release response message from the RAN management network element.

After receiving the second interface release request message from the first IAB node, the RAN management network element may release the second interface between the first IAB node and the RAN management network element, and then may send the second interface release response message to the first IAB node.

That the RAN management network element releases the second interface between the first IAB node and the RAN management network element may be understood as that the RAN management network element may remove various configuration information on the second interface, and erase various context information related to the first IAB node.

It should be understood that a release procedure of the second interface may alternatively be initiated by the RAN management network element. In this case, step 1611 may be replaced with the following: The RAN management network element sends a second interface release request message to the first IAB node. Step 1612 may be replaced with the following: The first IAB node sends a second interface release response message to the RAN management network element.

It should be understood that not all steps in step 1601 to step 1612 need to be performed. For example, step 1603 and step 1604 may be performed, or may not be performed. For another example, step 1609 and step 1610 may be performed, or may not be performed. Step 1607 and step 1608 may be performed, or may not be performed. For another example, step 1611 and step 1612 may be performed, or may not be performed.

It should be understood that a performing sequence of step 1601 to step 1612 may be adjusted. For example, step 1605 to step 1606 may be performed before step 1603 and step 1604.

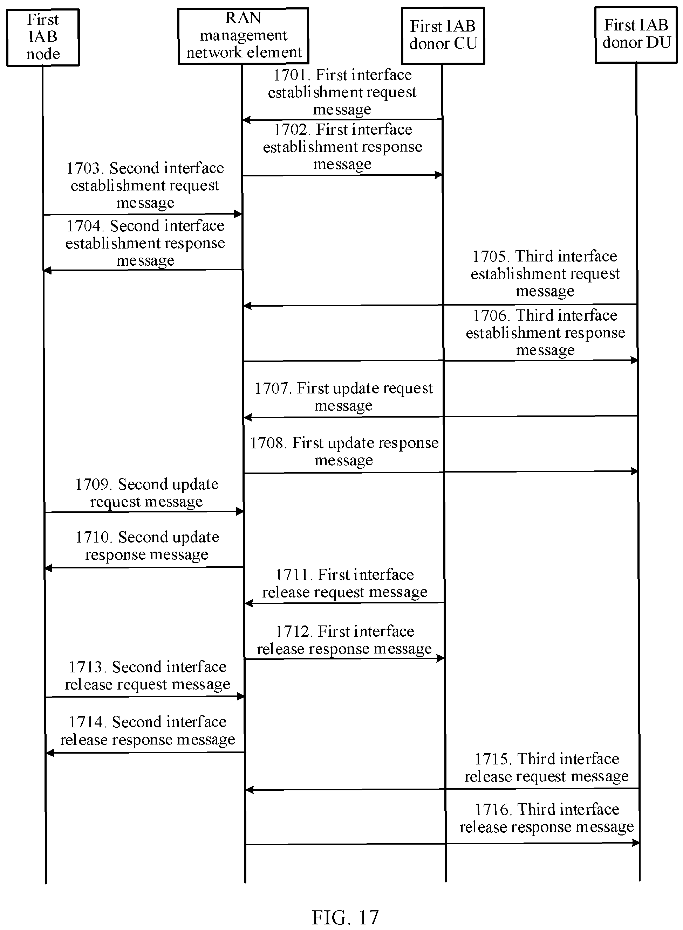

Based on the foregoing network architectures, refer to FIG. 17. FIG. 17 is a schematic flowchart of still another communication method according to an embodiment of the present invention. As shown in FIG. 17, the communication method may include the following steps.

A first IAB donor CU (or a first IAB donor CU-CP) communicates with a RAN management network element through a first interface. A first IAB node communicates with the RAN management network element through a second interface. A first IAB donor DU communicates with the RAN management network element through a third interface.

1701. The first IAB donor CU (or the first IAB donor CU-CP) sends a first interface establishment request message to the RAN management network element.

Correspondingly, the RAN management network element receives the first interface establishment request message from the first IAB donor CU (or the first IAB donor CU-CP).

When the first IAB donor CU (or the first IAB donor CU-CP) needs to provide a service for a node managed by the first IAB donor CU (or the first IAB donor CU-CP), to ensure normal data transmission, the first IAB donor CU may first send the first interface establishment request message to the RAN management network element. The first interface establishment request message is used to request to establish the first interface. The first interface establishment request message may carry an identifier of the first IAB donor CU (or the first IAB donor CU-CP). A node managed by the first IAB donor CU (or the first IAB donor CU-CP) may include an IAB node and a terminal device, and may further include a first IAB donor DU.

1702. The RAN management network element sends a first interface establishment response message to the first IAB donor CU (or the first IAB donor CU-CP).

Correspondingly, the first IAB donor CU (or the first IAB donor CU-CP) receives the first interface establishment response message from the RAN management network element.

After receiving the first interface establishment request message from the first IAB donor CU (or the first IAB donor CU-CP), the RAN management network element may send the first interface establishment response message to the first IAB donor CU (or the first IAB donor CU-CP). After the first IAB donor CU (or the first IAB donor CU-CP) receives the first interface establishment response message from the RAN management network element, it indicates that establishment of the first interface between the first IAB donor CU (or the first IAB donor CU-CP) and the RAN management network element is completed. The first IAB donor CU (or the first IAB donor CU-CP) may communicate with the RAN management network element through the first interface.

1703. The first IAB node sends a second interface establishment request message to the RAN management network element.

For detailed descriptions of step 1703, refer to step 1605.

1704. The RAN management network element sends a second interface establishment response message to the first IAB node.

For detailed descriptions of step 1704, refer to step 1606.

1705. The first IAB donor DU sends a third interface establishment request message to the RAN management network element.

Correspondingly, the RAN management network element receives the third interface establishment request message from the first IAB donor DU.

When the first IAB donor DU needs to communicate with the first IAB donor CU (or the first IAB donor CU-CP), the first IAB donor DU may first send the third interface establishment request message to the RAN management network element. The third interface establishment request message is used to request to establish the third interface. The third interface establishment request message may carry one or more of an identifier of the first IAB donor DU, topology information, and an identifier of a cell serving the first IAB donor DU. The topology information may include an identifier of another node connected to the first IAB donor DU. Other nodes connected to the first IAB donor DU may include an IAB node and the first IAB donor CU (or the first IAB donor CU-CP). The first request message in step 1504 may be a third interface establishment request message.

1706. The RAN management network element sends a third interface establishment response message to the first IAB donor DU.

Correspondingly, the first IAB donor DU receives the third interface establishment response message from the RAN management network element.

After receiving the third interface establishment request message from the first IAB donor DU, the RAN management network element may send the third interface establishment response message to the first IAB donor DU. After the first IAB donor DU receives the third interface establishment response message from the RAN management network element, it indicates that establishment of the third interface between the first IAB donor DU and the RAN management network element is completed. The first IAB donor DU may communicate with the RAN management network element through the third interface. The third interface establishment response message may carry configuration information of the first IAB donor DU.

1707. The first IAB donor DU sends a first update request message to the RAN management network element through the third interface.

Correspondingly, the RAN management network element receives the first update request message from the first IAB donor DU.

When a network topology of a node connected to the first IAB donor DU changes, if the configuration information of the first IAB donor DU needs to be adjusted, the first IAB donor DU may send the first update request message to the RAN management network element through the third interface, that is, initiate an IAB configuration update procedure to the RAN management network element. The first update request message is used to obtain updated configuration information of the first IAB donor DU. The first update request message may be a donor DU configuration update request message (that is, an IAB donor DU CONFIGURATIONUPDATE REQUEST message), or may be another message. A name of the first update request message is not limited.

The first update request message may carry updated topology information of the first IAB donor DU. The updated topology information may include an identifier of the node connected to the first IAB donor DU and a connection relationship. For the node connected to the first IAB donor DU, refer to the another node connected to the first IAB donor DU in step 1705. The first request message in step 1504 may be a first update request message.

1708. The RAN management network element sends a first update response message to the first IAB donor DU.

Correspondingly, the first IAB donor DU receives the first update response message from the RAN management network element.

After receiving the first update request message from the first IAB donor DU, the RAN management network element may send the first update response message to the first IAB donor DU. The first update response message may be a donor DU configuration update response message (that is, an IAB donor DU CONFIGURATIONUPDATE ACKNOWLEDGE/RESPONSE message), or may be another message. A name of the first update response message is not limited.

1709. The first IAB node sends a second update request message to the RAN management network element through the second interface.

For detailed descriptions of step 1709, refer to step 1607.

1710. The RAN management network element sends a second update response message to the first IAB node.

For detailed descriptions of step 1710, refer to step 1608.

1711. The first IAB donor CU (or the first IAB donor CU-CP) sends a first interface release request message to the RAN management network element.

For detailed descriptions of step 1711, refer to step 1609.

1712. The RAN management network element sends a first interface release response message to the first IAB donor CU (or the first IAB donor CU-CP).

For detailed descriptions of step 1712, refer to step 1610.

1713. The first IAB node sends a second interface release request message to the RAN management network element.

For detailed descriptions of step 1713, refer to step 1611.

1714. The RAN management network element sends a second interface release response message to the first IAB node.

For detailed descriptions of step 1714, refer to step 1612.

1715. The first IAB donor DU sends a third interface release request message to the RAN management network element.

Correspondingly, the RAN management network element receives the third interface release request message from the first IAB donor DU.

When the first IAB donor DU needs to release the third interface due to some reasons, the first IAB donor DU may send the third interface release request message to the RAN management network element. The third interface release request message may carry the identifier of the first IAB donor DU, and is used to request to release the third interface between the first IAB donor DU and the RAN management network element, that is, used to request to remove the third interface between the first IAB donor DU and the RAN management network element. The third interface release request message may be a third interface release request message, or may be another message. A name of the third interface release request message is not limited.

1716. The RAN management network element sends a third interface release response message to the first IAB donor DU.

Correspondingly, the first IAB donor DU receives the third interface release response message from the RAN management network element.

After receiving the third interface release request message from the first IAB donor DU, the RAN management network element may release the third interface between the first IAB donor DU and the RAN management network element, and then may send the third interface release response message to the first IAB donor DU.

That the RAN management network element releases the third interface between the first IAB donor DU and the RAN management network element may be understood as that the RAN management network element may remove various configuration information on the third interface, and erase various context information related to the first IAB donor DU.

It should be understood that a release procedure of the third interface may alternatively be initiated by the RAN management network element. In this case, step 1715 may be replaced with the following: The RAN management network element sends a third interface release request message to the first IAB donor DU. Step 1716 may be replaced with the following: The first IAB donor DU sends a third interface release response message to the RAN management network element.

It should be understood that not all steps in step 1701 to step 1716 need to be performed. For example, step 1707 and step 1708 may be performed, or may not be performed. For another example, step 1709 and step 1710 may be performed, or may not be performed. Step 1711 and step 1712 may be performed, or may not be performed. For another example, step 1713 and step 1714 may be performed, or may not be performed. For another example, step 1715 and step 1716 may be performed, or may not be performed.

It should be understood that a performing sequence of step 1701 to step 1716 may be adjusted. For example, step 1715 to step 1716 may be performed before step 1713 and step 1714.

It should be understood that when the first IAB donor includes the first IAB donor DU and the first IAB donor CU, communication between the first IAB donor and the RAN management network element through the first interface may be understood as communication between the first IAB donor CU and the RAN management network element through the first interface.

It should be understood that when the first IAB donor includes the first donor DU, the first donor CU-CP, and a first donor CU-UP, communication between the first IAB donor and the RAN management network element through the first interface may be understood as communication between the first IAB donor CU-CP and the RAN management network element through the first interface.

It should be understood that in the foregoing communication method, a function performed by the RAN management network element may also be performed by a module (for example, a chip) in the RAN management network element, a function performed by the first IAB donor may also be performed by a module (for example, a chip) in the first IAB donor, and a function performed by the first IAB node may also be performed by a module (for example, a chip) in the first IAB node.

It should be understood that related information (that is, same information or similar information) in the foregoing different embodiments may be mutually referenced.

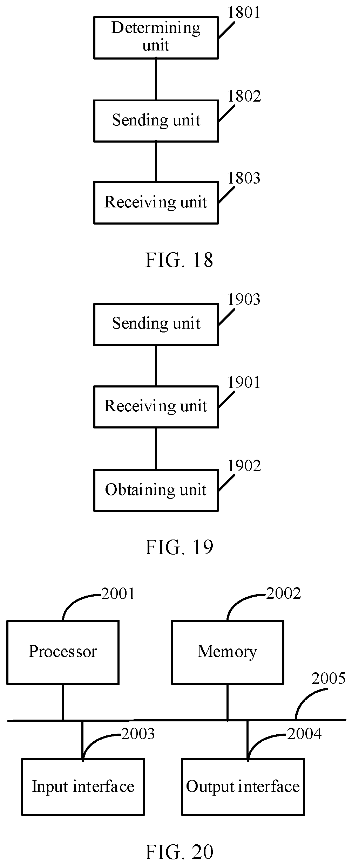

Based on the foregoing network architectures, refer to FIG. 18. FIG. 18 is a schematic diagram of a structure of a communication apparatus according to an embodiment of the present invention. As shown in FIG. 18, the communication apparatus may include a determining unit 1801 and a sending unit 1802. The communication apparatus may further include a receiving unit 1803.

In a case, the communication apparatus may be a RAN management network element. The RAN management network element may be connected to a first IAB donor through a first interface. The first IAB donor is connected to a first IAB node through a wireless backhaul link. The determining unit 1801 is configured to determine configuration information of the first IAB donor and/or the first IAB node. The configuration information includes one or more of address information, routing information, and cell information.

The sending unit 1802 is configured to send the configuration information to the first IAB donor.

In an embodiment, the receiving unit 1803 is configured to receive a request message from the first IAB donor.

The sending unit 1802 is specifically configured to send the configuration information to the first IAB donor in response to the request message.

In an embodiment, the address information includes a BAP layer identifier and/or an IP address.

In an embodiment, the routing information includes an adaptation layer routing identifier and/or a routing mapping table. The routing mapping table includes the adaptation layer routing identifier and an identifier of a next-hop node.

In an embodiment, the cell information includes an identifier of a cell and a resource configuration of the cell.

In an embodiment, the resource configuration of the cell includes one or more of frequency information of the cell, bandwidth information of the cell, and an uplink and downlink duplex mode of the cell.

In an embodiment, the request message includes a quantity of addresses required by the first IAB node and/or the first IAB donor and identifiers/an identifier of the first IAB node and/or the first IAB donor.

In an embodiment, the request message includes topology information. The topology information includes a connection relationship between the first IAB donor and/or the first IAB node and another node.

In an embodiment, the request message includes an identifier of a cell serving the first IAB donor and/or the first IAB node.

In an embodiment, the request message is a first interface establishment request message or an IAB configuration update request message.

For more detailed descriptions of the foregoing determining unit 1801, the sending unit 1802, and the receiving unit 1803, directly refer to related descriptions of the RAN management network element in the method embodiments shown in FIG. 9 to FIG. 14. Details are not described herein again.

In another case, the communication apparatus may be a RAN management network element. The RAN management network element is connected to a first IAB donor through a first interface. The RAN management network element is connected to a first IAB node through a second interface. The first IAB donor is connected to the first IAB node through a wireless backhaul link. The determining unit 1801 is configured to determine configuration information of the first IAB node. The configuration information of the first IAB node includes one or more of address information, routing information, and cell information.

The sending unit 1802 is configured to send the configuration information of the first IAB node to the first IAB node through the second interface.

In an embodiment, the sending unit 1802 is further configured to send the configuration information of the first IAB node to the first IAB donor through the first interface.

In an embodiment, the determining unit 1801 is further configured to determine configuration information of the first IAB donor.

The sending unit 1802 is further configured to send the configuration information of the first IAB donor to the first IAB donor through the first interface.

In an embodiment, the address information of the first IAB node includes a BAP layer identifier and/or an IP address.

In an embodiment, the routing information of the first IAB node includes an adaptation layer routing identifier and/or a routing mapping table. The routing mapping table includes the adaptation layer routing identifier and an identifier of a next-hop node.

In an embodiment, the cell information of the first IAB node includes an identifier of a cell and a resource configuration of the cell.

In an embodiment, the resource configuration of the cell includes one or more of frequency information of the cell, bandwidth information of the cell, and an uplink and downlink duplex mode of the cell.

In an embodiment, the receiving unit 1803 is configured to receive a first request message from the first IAB donor.

That the sending unit 1802 sends the configuration information of the first IAB donor to the first IAB donor through the first interface includes:
sending the configuration information of the first IAB donor to the first IAB donor through the first interface in response to the first request message.

In an embodiment, the first request message includes a quantity of addresses required by the first IAB donor and an identifier of the first IAB donor.

In an embodiment, the first request message includes first topology information. The first topology information includes a connection relationship between the first IAB donor and an IAB node.

In an embodiment, the first request message includes an identifier of a cell serving the first IAB donor.

In an embodiment, the first request message is a first interface establishment request message or an IAB configuration update request message.

In an embodiment, the receiving unit 1803 is further configured to receive a second request message from the first IAB node.

That the sending unit 1802 sends the configuration information to the first IAB node through the second interface includes:
sending the configuration information to the first IAB node through the second interface in response to the second request message.

In an embodiment, the second request message includes a quantity of addresses required by the first IAB node and an identifier of the first IAB node.

In an embodiment, the second request message includes second topology information. The second topology information includes a connection relationship between the first IAB node and a parent node and/or a child node of the first IAB node.

In an embodiment, the second request message includes an identifier of a cell serving the first IAB node.

In an embodiment, the second request message is a second interface establishment request message or an IAB configuration update request message.

For more detailed descriptions of the foregoing determining unit 1801, the sending unit 1802, and the receiving unit 1803, directly refer to related descriptions of the RAN management network element in the method embodiments shown in FIG. 15 to FIG. 17. Details are not described herein again.

Based on the foregoing network architectures, refer to FIG. 19. FIG. 19 is a schematic diagram of a structure of another communication apparatus according to an embodiment of the present invention. As shown in FIG. 19, the communication apparatus may include a receiving unit 1901 and an obtaining unit 1902. The communication apparatus may further include a sending unit 1903.

In a case, the communication apparatus may be a first IAB donor. The first IAB donor is connected to a RAN management network element through a first interface. The first IAB donor is connected to a first IAB node through a wireless backhaul link. The receiving unit 1901 is configured to receive configuration information of the first IAB donor and/or the first IAB node from the RAN management network element through the first interface. The configuration information includes one or more of address information, routing information, and cell information.

The obtaining unit 1902 is configured to obtain one or more of the address information, the routing information, and the cell information.

In an embodiment, the sending unit 1903 is configured to send a request message to the RAN management network element. The request message is used to request the configuration information.

In an embodiment, the sending unit 1903 is further configured to send the configuration information of the first IAB node to the first IAB node.

In an embodiment, the address information includes a BAP layer identifier and/or an IP address.

In an embodiment, the routing information includes an adaptation layer routing identifier and/or a routing mapping table. The routing mapping table includes the adaptation layer routing identifier and an identifier of a next-hop node.

In an embodiment, the cell information includes an identifier of a cell and a resource configuration of the cell.

In an embodiment, the resource configuration of the cell includes one or more of frequency information of the cell, bandwidth information of the cell, and an uplink and downlink duplex mode of the cell.

In an embodiment, the request message includes a quantity of addresses required by the first IAB node and/or the first IAB donor and identifiers/an identifier of the first IAB node and/or the first IAB donor.

In an embodiment, the request message includes topology information. The topology information includes a connection relationship between the first IAB donor and/or the first IAB node and another node.

In an embodiment, the request message includes an identifier of a cell serving the first IAB donor and/or the first IAB node.

In an embodiment, the request message is a first interface establishment request message or an IAB configuration update request message.

For more detailed descriptions of the foregoing receiving unit 1901, the obtaining unit 1902, and the sending unit 1903, directly refer to related descriptions of the first IAB donor in the method embodiments shown in FIG. 9 to FIG. 14. Details are not described herein again.

In another case, the communication apparatus may be a first IAB node. The first IAB node is connected to a first IAB donor through a wireless backhaul link. The first IAB node is connected to a radio access network RAN management network element through a second interface. The receiving unit 1901 is configured to receive configuration information of the first IAB node from the RAN management network element through the second interface. The configuration information includes one or more of address information, routing information, and cell information.

The obtaining unit 1902 is configured to obtain one or more of the address information, the routing information, and the cell information.

In an embodiment, the address information includes a BAP layer identifier and/or an IP address.

In an embodiment, the routing information includes an adaptation layer routing identifier and/or a routing mapping table. The routing mapping table includes the adaptation layer routing identifier and an identifier of a next-hop node.

In an embodiment, the cell information includes an identifier of a cell and a resource configuration of the cell.

In an embodiment, the resource configuration of the cell includes one or more of frequency information of the cell, bandwidth information of the cell, and an uplink and downlink duplex mode of the cell.

In an embodiment, the sending unit 1903 is configured to send a second request message to the RAN management network element through the second interface. The second request message is used to request the configuration information.

In an embodiment, the second request message includes a quantity of addresses required by the first IAB node and an identifier of the first IAB node.

In an embodiment, the second request message includes second topology information. The second topology information includes a connection relationship between the first IAB node and a parent node and/or a child node of the first IAB node.

In an embodiment, the second request message includes an identifier of a cell serving the first IAB node.

In an embodiment, the second request message is a second interface establishment request message or an IAB configuration update request message.

For more detailed descriptions of the receiving unit 1901, the obtaining unit 1902, and the sending unit 1903, directly refer to related descriptions of the first IAB node in the method embodiments shown in FIG. 15 to FIG. 17. Details are not described herein again.

Based on the foregoing network architectures, refer to FIG. 20. FIG. 20 is a schematic diagram of a structure of still another communication apparatus according to an embodiment of the present invention. As shown in FIG. 20, the communication apparatus may include a processor 2001, a memory 2002, an input interface 2003, an output interface 2004, and a bus 2005. The memory 2002 may exist independently, and may be connected to the processor 2001 through the bus 2005. Alternatively, the memory 2002 may be integrated with the processor 2001. The bus 2005 is configured to implement a connection between these components.

In an embodiment, the communication apparatus may be a RAN management network element. When computer program instructions stored in the memory 2002 are executed, the processor 2001 is configured to control the receiving unit 1803 and the sending unit 1802 to perform operations performed in the foregoing embodiment. The processor 2001 is further configured to control the determining unit 1801 to perform operations performed in the foregoing embodiment. The input interface 2003 is configured to perform operations performed by the receiving unit 1803 in the foregoing embodiment. The output interface 2004 is configured to perform operations performed by the sending unit 1802 in the foregoing embodiment. The RAN management network element may be further configured to perform various methods performed by the RAN management network element in the method embodiments in FIG. 9 to FIG. 14 or FIG. 15 to FIG. 17. Details are not described again.

In an embodiment, the communication apparatus may be a first IAB donor. When computer program instructions stored in the memory 2002 are executed, the processor 2001 is configured to control the receiving unit 1901 and the sending unit 1903 to perform operations performed in the foregoing embodiment. The processor 2001 is further configured to control the obtaining unit 1902 to perform operations performed in the foregoing embodiment. The input interface 2003 is configured to perform operations performed by the receiving unit 1901 in the foregoing embodiment. The output interface 2004 is configured to perform operations performed by the sending unit 1903 in the foregoing embodiment. The first IAB donor may be further configured to perform various methods performed by the first IAB donor in the method embodiments in FIG. 9 to FIG. 14. Details are not described again.

In an embodiment, the communication apparatus may be a first IAB node. When computer program instructions stored in the memory 2002 are executed, the processor 2001 is configured to control the receiving unit 1901 and the sending unit 1903 to perform operations performed in the foregoing embodiment. The processor 2001 is further configured to control the obtaining unit 1902 to perform operations performed in the foregoing embodiment. The input interface 2003 is configured to perform operations performed by the receiving unit 1901 in the foregoing embodiment. The output interface 2004 is configured to perform operations performed by the sending unit 1903 in the foregoing embodiment. The foregoing first IAB node may be further configured to perform various methods performed by the first IAB node in the method embodiments in FIG. 15 to FIG. 17. Details are not described again.

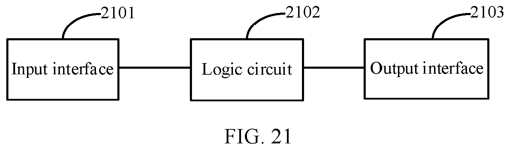

Based on the foregoing network architectures, refer to FIG. 21. FIG. 21 is a schematic diagram of a structure of still another communication apparatus according to an embodiment of the present invention. As shown in FIG. 21, the communication apparatus may include an input interface 2101, a logic circuit 2102, and an output interface 2103. The input interface 2101 is connected to the output interface 2103 through the logic circuit 2102. The input interface 2101 is configured to receive information from another communication apparatus. The output interface 2103 is configured to output, schedule, or send information to the another communication apparatus. The logic circuit 2102 is configured to perform an operation other than operations of the input interface 2101 and the output interface 2103, for example, implement a function implemented by the processor 2001 in the foregoing embodiment. The communication apparatus may be a RAN management network element, a first IAB donor, or a first IAB node. For more detailed descriptions of the input interface 2101, the logic circuit 2102, and the output interface 2103, directly refer to related descriptions of the RAN management network element, the first IAB donor, or the first IAB node in the foregoing method embodiments. Details are not described herein again.

An embodiment of the present invention further discloses a computer readable storage medium. The computer readable storage medium stores instructions. When the instructions are executed, the methods in the foregoing method embodiments are performed.

An embodiment of the present invention further discloses a computer program product including instructions. When the instructions are executed, the methods in the foregoing method embodiments are performed.

An embodiment of the present invention further discloses a communication system. The communication system may include a RAN management network element, a first IAB donor, a first IAB node, and the like. For detailed descriptions, refer to the communication methods shown in FIG. 9 to FIG. 16.

## Claims

1. A communication method, wherein the method is applied to a radio access network, RAN, management network element, the RAN management network element is connected to a first integrated access and backhaul, IAB, donor through a first interface, the RAN management network element is connected to a first IAB node through a second interface, the first IAB donor is connected to the first IAB node through a wireless backhaul link, and the method comprises:
determining (901) configuration information of the first IAB node, wherein the configuration information comprises one or more of address information, routing information, and cell information; and
sending (902) the configuration information to the first IAB node through the second interface,
wherein the method further comprises:
determining (901) configuration information of the first IAB donor; and
sending (902) the configuration information of the first IAB donor to the first IAB donor through the first interface,
wherein
the sending the configuration information of the first IAB donor to the first IAB donor through the first interface comprises:
receiving a first request message from the first IAB donor to request the configuration information of the first IAB donor; and
sending the configuration information of the first IAB donor to the first IAB donor through the first interface in response to the first request message.

2. The method according to claim 1, wherein the method further comprises:
receiving a second request message from the first IAB node; and
the sending the configuration information to the first IAB node through the second interface comprises:
sending the configuration information to the first IAB node through the second interface in response to the second request message.

3. A communication apparatus, wherein the apparatus comprises a processor (2001) and a memory (2002); and the memory (2002) comprises a program instruction, and when the program instruction is run by the processor (2001), the method according to any one of claims 1, 2 is performed.

4. A computer storage medium, comprising a computer instruction, and when the computer instruction runs on a network device, the network device is enabled to perform the method according to any one of claims 1, 2.

5. A computer program product, wherein when the computer program product runs on a computer, the computer is enabled to perform the method according to any one of claims 1, 2.

## Patentansprüche

1. Kommunikationsverfahren, wobei das Verfahren auf ein Funkzugangsnetzwerk(RAN)-Managementnetzwerkelement angewendet wird, das RAN-Managementnetzwerkelement über eine erste Schnittstelle mit einem ersten integrierten Zugangs- und Backhaul(IAB)-Donor verbunden ist, das RAN-Managementnetzwerkelement über eine zweite Schnittstelle mit einem ersten IAB-Knoten verbunden ist, der erste IAB-Donor über eine drahtlose Backhaul-Verbindung mit dem ersten IAB-Knoten verbunden ist, und das Verfahren Folgendes umfasst:
Bestimmen (901) von Konfigurationsinformationen des ersten IAB-Knotens, wobei die Konfigurationsinformationen eine oder mehrere von Adressinformationen, Routing-Informationen und Zelleninformationen umfassen; und
Senden (902) der Konfigurationsinformationen an den ersten IAB-Knoten über die zweite Schnittstelle,
wobei das Verfahren ferner Folgendes umfasst:
Bestimmen (901) von Konfigurationsinformationen des ersten IAB-Donors; und
Senden (902) der Konfigurationsinformationen des ersten IAB-Donors an den ersten IAB-Donor über die erste Schnittstelle,
wobei das Senden der Konfigurationsinformationen des ersten IAB-Donors an den ersten IAB-Donor über die erste Schnittstelle Folgendes umfasst:
Empfangen einer ersten Anforderungsnachricht von dem ersten IAB-Donor, um die Konfigurationsinformationen des ersten IAB-Donors anzufordern; und
Senden der Konfigurationsinformationen des ersten IAB-Donors an den ersten IAB-Donor über die erste Schnittstelle als Reaktion auf die erste Anforderungsnachricht.

2. Verfahren nach Anspruch 1, wobei das Verfahren ferner Folgendes umfasst:
Empfangen einer zweiten Anforderungsnachricht von dem ersten IAB-Knoten; und
das Senden der Konfigurationsinformationen an den ersten IAB-Knoten über die zweite Schnittstelle umfasst Folgendes:
Senden der Konfigurationsinformationen an den ersten IAB-Knoten über die zweite Schnittstelle als Reaktion auf die zweite Anforderungsnachricht.

3. Kommunikationsvorrichtung, wobei die Vorrichtung einen Prozessor (2001) und einen Speicher (2002) umfasst; und der Speicher (2002) eine Programmanweisung umfasst und, wenn die Programmanweisung durch den Prozessor (2001) ausgeführt wird, das Verfahren nach einem der Ansprüche 1, 2 durchgeführt wird.

4. Computerspeichermedium, umfassend eine Computeranweisung, und wenn die Computeranweisung auf einer Netzwerkeinrichtung ausgeführt wird, die Netzwerkeinrichtung in die Lage versetzt wird, das Verfahren nach einem der Ansprüche 1, 2 durchzuführen.

5. Computerprogrammprodukt, wobei, wenn das Computerprogrammprodukt auf einem Computer ausgeführt wird, der Computer in die Lage versetzt wird, das Verfahren nach einem der Ansprüche 1, 2 durchzuführen.

## Revendications

1. Procédé de communication, dans lequel le procédé est appliqué à un élément de réseau de gestion d'un réseau d'accès radio (RAN), l'élément de réseau de gestion de RAN est connecté à un premier donneur d'accès et de liaison terrestre intégré (IAB) par le biais d'une première interface, l'élément de réseau de gestion de RAN est connecté à un premier nœud IAB par le biais d'une seconde interface, le premier donneur IAB est connecté au premier nœud IAB par le biais d'une liaison de liaison terrestre sans fil, et le procédé comprend :
la détermination (901) d'informations de configuration du premier nœud IAB, dans lequel les informations de configuration comprennent une ou plusieurs parmi des informations d'adresse, des informations de routage et des informations de cellule ; et
l'envoi (902) des informations de configuration au premier nœud IAB par le biais de la seconde interface,
dans lequel le procédé comprend en outre :
la détermination (901) d'informations de configuration du premier donneur IAB ; et
l'envoi (902) des informations de configuration du premier donneur IAB au premier donneur IAB par le biais de la seconde interface,
dans lequel l'envoi des informations de configuration du premier donneur IAB au premier donneur IAB par le biais de la seconde interface comprend :
la réception d'un premier message de demande du premier donneur IAB pour demander les informations de configuration du premier donateur IAB ; et
l'envoi des informations de configuration du premier donneur IAB au premier donneur IAB par le biais de la première interface en réponse au premier message de demande.

2. Procédé selon la revendication 1, dans lequel le procédé comprend en outre :
la réception d'un second message de demande du premier nœud IAB ; et
l'envoi des informations de configuration au premier nœud IAB par le biais de la seconde interface comprend :
l'envoi des informations de configuration au premier nœud IAB par le biais de la seconde interface en réponse au second message de demande.

3. Appareil de communication, dans lequel l'appareil comprend un processeur (2001) et une mémoire (2002) ; et la mémoire (2002) comprend une instruction de programme, et lorsque l'instruction de programme est exécutée par le processeur (2001), le procédé selon l'une quelconque des revendications 1, 2 est réalisé.

4. Support de stockage informatique, comprenant une instruction informatique et lorsque l'instruction informatique est exécutée sur un dispositif réseau, le dispositif réseau est activé pour réaliser le procédé selon l'une quelconque des revendications 1, 2.

5. Produit programme informatique, dans lequel lorsque le produit programme informatique est exécuté sur un ordinateur, l'ordinateur est activé pour réaliser le procédé selon l'une quelconque des revendications 1, 2.
